Europäisches Patentamt

European Patent Office

Office européen des brevets

(19)

(11) **EP 1 463 058 A1**

(12) **EUROPEAN PATENT APPLICATION**

(43) Date of publication:
**29.09.2004 Bulletin 2004/40**

(51) Int Cl.⁷: **G11B 27/034**, G11B 27/10

(21) Application number: **04251756.5**

(22) Date of filing: **25.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **27.03.2003 JP 2003086986**

(71) Applicant: **SONY CORPORATION
Tokyo 141 (JP)**

(72) Inventors:
• **Kawa, Seiji, c/o Sony Corporation
  Tokyo (JP)**
• **Suzuki, Takao, c/o Sony Corporation
  Tokyo (JP)**

(74) Representative: **Horner, David Richard et al
D Young & Co,
21 New Fetter Lane
London EC4A 1DA (GB)**

(54) **Information creating apparatus, information creating method, reproducing apparatus, reproducing method, and program**

(57)     An information creating apparatus is disclosed creating information to be provided to a reproducing apparatus for reproducing data. The information creating apparatus includes a first acquiring element for acquiring edit point information describing an edit point set for the data; and a creating element for creating reproduction control information in accordance with the edit point information acquired by the first acquiring element. The reproduction control information results from an editing process based on the edit point and serves to control reproduction of the data.

FIG. 2

EP 1 463 058 A1

**Description**

BACKGROUND OF THE INVENTION

The present invention relates to an information creating apparatus, an information creating method, a reproducing apparatus, a reproducing method, and a program. More particularly, the invention relates to an information creating apparatus, an information creating method, a reproducing apparatus, a reproducing method, and a program for ensuring real-time reproduction of AV (Audio-Visual) data without triggering picture quality degradation and other irregularities.

In recent years, recording media such as CD-RW (Compact Disc-ReWritable) and DVD-RW (Digital Versatile Disc-ReWritable) have come into general use thanks to their declining prices. These disc-like recording media permit random access to data wherever they are recorded on the disc. When video and audio data (AV data) are written to and deleted from the disc repeatedly, some of the AV data that should be reproduced consecutively often end up being recorded in discontinuous areas on the disc.

Continuous data could also be recorded discontinuously on the disc where AV data are subjected to non-destructive editing. Non-destructive editing involves establishing only so-called edit points (e.g., IN and OUT points) with regard to AV data recorded as raw material data on the optical disc or the like and not actually editing (i.e., destroying) the material data. A non-destructive editing process typically creates an edit list, a list of edit points that have been established regarding the material data. After the editing, the material data are reproduced from the optical disc in accordance with the edit points described in the edit list.

Where raw material data have undergone irreversible conversion such as MPEG (Moving Picture Experts Group) encoding and where non-destructive editing is in use, there is no need for such conventional processes as decoding the material data, combining the decoded results according to the edit points described in the edit list, and again subjecting the combined material data to MPEG encoding. Without the repetitive decoding and encoding, it is possible to prevent picture quality degradation or related irregularities.

When AV data recorded in discontinuous areas on the optical disc are to be reproduced following non-destructive editing, seeks occur from one recorded area to another on the apparatus carrying out the reproduction.

If the time required for a seek is inordinately long, the AV data item to be reproduced at that point may not be retrieved in time. In that case the reproduction process can be interrupted, which means real-time reproduction of AV data is not guaranteed.

US Patent Application Serial No. 10/029903 discloses a technique whereby discontinuously recorded raw material data are rearranged into bridge clips so as to minimize seek time. The disclosed technique is intended to avert a buffer underflow stemming from prolonged seek times and thereby to ensure real-time reproduction of AV data.

However, creating bridge clips and referencing them for reproduction will resolve the problem of prolonged seek times with the reproducing apparatus but leaves one thing unresolved. That is, if the reproducing apparatus has only one decoder capable of decoding at standard speed, then it is difficult to reproduce AV data (MPEG stream) that were recorded by the MPEG method on the optical disc, in accordance with the edit points described in the edit list.

The MPEG method involves three picture types: I (Intra) pictures, P (Predictive) pictures, and B (Bidirectionally predictive) pictures. The I picture is intra-encoded without reference to any other picture. The P picture is predictively encoded using a predicted picture created by referencing an I or P picture that was intra-encoded or displayed earlier. The B picture is predictively encoded using a predicted picture created by referencing either or both of two kinds of pictures: an I or P picture intra-coded or displayed earlier, and an I or P picture to be displayed later.

The decoding takes place in the same sequence. Each picture is decoded by referencing a picture to be displayed later as needed.

Under such a scheme, depending on the type of the picture for which an IN point is set (i.e., any one of an I, a P, and a B picture), it is necessary to decode in advance an undisplayed picture, i.e., a picture decoded only for reference purposes preparatory to decoding and displaying the picture in question. That process can make it impossible for the standard-speed decoder to ensure real-time reproduction.

More specifically, suppose that a Long GOP (Group Of Pictures) structure is made up of GOP's of 15 frame pictures each wherein every third picture is an I or P picture.

Suppose also that the pictures constituting one GOP are each represented by an alphabetic character that stands for a picture type (I, P, or B) combined with a numeral denoting a location in order of display. In that case, one GOP may illustratively constitute of B1, B2, I3, B4, B5, P6, B7, B8, P9, B10, B11, P12, B13, B14, and P15.

A B picture may need to be encoded by referencing not only a picture that was displayed earlier but also a picture to be displayed later. If the picture to be displayed later has yet to be decoded upon decoding of a given B picture, that B picture cannot be decoded at that point.

Under the MPEG scheme, the picture to be referenced preparatory to decoding any B picture is decoded earlier than that B picture. It follows that the pictures B1 through P15 making up the above-described GOP is decoded in the order of I3, B1, B2, P6, B4, B5, P9, B7, B8, P12, B10, B11, P15, B13, and B14.

More specifically, the pictures B1 and B2 are decoded by referencing the picture P15 displayed earlier from the preceding GOP and the picture I3 to be displayed later from the same GOP. The picture I3 is decoded without reference to any other picture. The pictures B4 and B5 are decoded by referencing the picture I3 displayed earlier from the same GOP and the picture P6 to be displayed later from the same GOP. The picture P6 is decoded by referencing the picture I3 displayed earlier from the same GOP. The pictures B7 and B8 are decoded by referencing the picture P6 from the same GOP and the picture P9 to be displayed later from the same GOP. The picture P9 is decoded by referencing the picture P6 displayed earlier from the same GOP. The pictures B10 and B11 are decoded by referencing the picture P9 displayed earlier from the same GOP and the picture P12 to be displayed later from the same GOP. The picture P12 is decoded by referencing the picture P9 from the same GOP. The pictures B13 and B14 are decoded by referencing the picture P12 displayed earlier from the same GOP and the picture P15 to be displayed later from the same GOP. The picture P15 is decoded by referencing the picture P12 displayed earlier from the same GOP.

As described, the number of pictures to be decoded in advance varies depending on the type of the picture, which is about to be decoded and for which an edit point is set. As a result, the time and the location at which to start decoding a given picture vary accordingly.

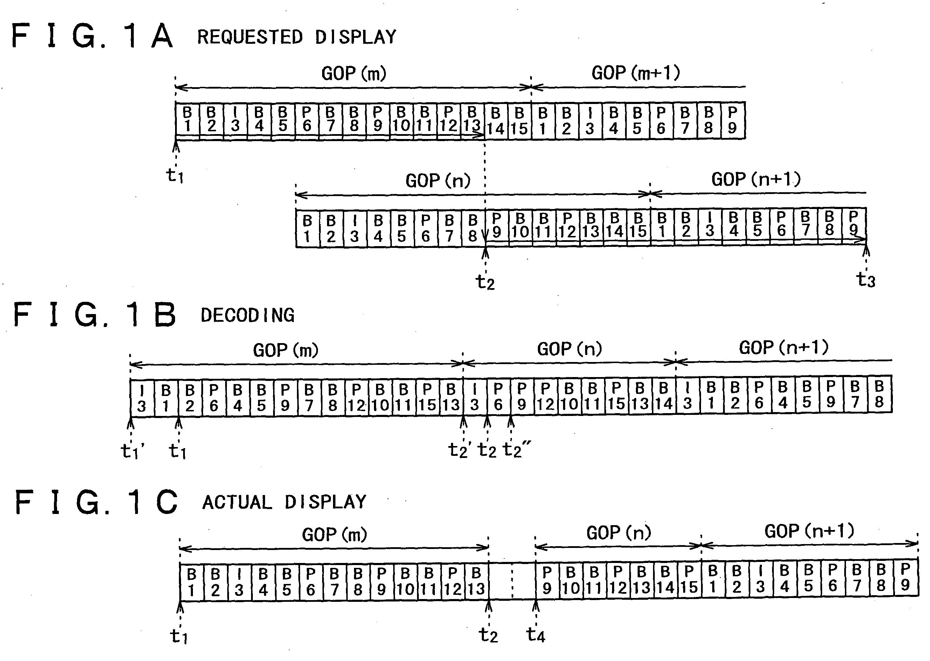

Described below with reference to FIGS. 1A, 1B, and 1C is how AV data recorded by the MPEG method are typically decoded thereby. It is assumed here that an m-th GOP from the beginning of AV data is represented by GOP(m) and that, as shown in FIG. 1A, an edit list requires having pictures B1 through B13 of GOP(m) displayed between a time $t_1$ and a time $t_2$ and having a picture P9 of GOP(n) through a picture P9 of GOP(n+1) immediately after GOP(n) displayed between the time $t_2$ and a time $t_3$. In such a case, the decoding based on these requirements is carried out as shown in FIG. 1B.

More specifically, in order to display the pictures B1 through B13 of GOP(m) in that order between the time $t_1$ and the time $t_2$, it is necessary to decode the pictures in the order of I3, B1, B2, P6, B4, B5, P9, B7, B8, P12, B10, B11, P15, and B13.

In order to display the pictures P9 through B15 of GOP(n) in that order between the time $t_2$ and the time $t_3$, it is necessary to decode the pictures in the order of I3, P6, P9, P12, B10, B11, P15, B13, and B14. During the decoding, the picture P6 needs to be referenced so as to decode the picture P9 of GOP(n) for which an IN point is set; the picture I3 needs to be referenced in order to decode the picture P6. With regard to GOP(n), the pictures are thus decoded in the order of I3, P6, P9, etc., in that order, including the undisplayed pictures I3 and P6.

Likewise, in order to display the pictures B1 through B9 of GOP(n+1) in that order, it is necessary to decode the pictures in the order of I3, B1, B2, P6, B4, B5, P9, B7, and B8.

Referring to FIG. 1B, the picture B1 of GOP(m) ought to have been decoded before the time $t_1$ at which the picture B1 is required to start being displayed. Given that requirement, it is necessary to start decoding the picture I3 of GOP(m) at a time $t_1'$ before the time $t_1$, early enough to decode two pictures (I3 and B1) in time.

Similarly, the picture P9 of GOP(n) ought to have been decoded before the time $t_2$ at which the picture P9 is required to start being displayed (i.e., the time at which the display of the picture B13 of GOP(m) ends). That means the picture P9 should start getting decoded by a time $t_2'$ before the time $T_2$, early enough to decode in time the picture P9 itself.

However, as shown in FIG. 1B, the decoding of the picture P9 actually starts at a time $t_2''$ after the time $t_2$, i.e., after a period in which to decode another picture (picture P6). The location at which to start decoding is thus delayed by the period between the time $t_2'$ and the time $t_2''$. That is, although not shown, the picture on display freezes during the period needed to decode the pictures I3 and P6 to be referenced in decoding the picture P9.

As shown in FIG. 1C, the period between the time $t_2$ at which the display of the picture B13 of GOP(m) ends (i.e., the time at which the display of the picture B9 of GOP(n) ought to start) and a time $t_4$ at which the display of the picture P9 starts corresponds to the period between the time $t_2'$ and the time $t_2''$ in FIG. 1B (the period needed to decode the two pictures). The freeze of the display takes place during that period.

Depending on the edit point in effect, it is thus necessary to decode not only the picture about to be displayed but also some other pictures not to be displayed. Although the technique proposed by the above-cited patent application resolves the problem of prolonged seek times, it falls short of ensuring real-time reproduction of AV data.

If GOP(m) and GOP(n) in FIGS. 1A and 1B are located in discontinuous areas, a seek time is needed for the reproducing apparatus to switch from one area to another. In that case, the freeze period discussed above becomes longer than the period of time in which to decode the two pictures.

The technique proposed by the above-cited patent application imposes furthers restrictions on edited AV data: in order to reproduce each connection point (i.e., edit point) in seamless fashion, unnecessary pictures need to be removed from around each edit point and the resulting AV data near the edit point need to be re-encoded into a single continuous MPEG stream. Such re-encoding can incur degradation of picture quality.

For example, if a bridge clip forming a plurality of GOP's includes an edit point, the clip needs to be decoded so that any unnecessary picture are removed from near that edit point. The decoded data minus the unnecessary pictures are again encoded into a bridge clip. The re-encoding process can degrade the quality of pictures that are obtained by reproducing the bridge clip.

## SUMMARY OF THE INVENTION

Embodiments of the present invention provide an information creating apparatus, an information creating method, a reproducing apparatus, a reproducing method, and a program for ensuring real-time reproduction of AV data without incurring the degradation of picture quality or other irregularities.

According to one aspect of the present invention, there is provided an information creating apparatus for creating information to be provided to a reproducing apparatus for reproducing data. The information creating apparatus includes a first acquiring element for acquiring edit point information describing an edit point set for the data, and a creating element for creating reproduction control information in accordance with the edit point information acquired by the first acquiring element, the reproduction control information resulting from an editing process based on the edit point and serving to control reproduction of the data.

Preferably, the reproducing apparatus may further include a determining element for determining whether it is possible for the reproducing apparatus to reproduce in real time the data resulting from the editing process, and a relocating element for relocating data in proximity of the edit point if the determining element determines that it is impossible for the reproducing apparatus to reproduce in real time the data resulting from the editing process. The creating element may create the reproduction control information including information for indicating the data relocated by the relocating element as a reproduction object.

The creating element may preferably create the reproduction control information including information for designating a decoder of the reproducing apparatus for use in reproducing the data.

Preferably, the information creating apparatus may further include a determining element for determining a location at which the reproducing apparatus starts reproducing the data. The creating element may create the reproduction control information including information for designating the starting location determined by the determining element.

The creating element may preferably create the reproduction control information including information for designating the starting location determined by the determining element using address information processible by the reproducing apparatus.

Preferably, the information creating apparatus may further include a second acquiring element which, if the data are constituted by pictures, then acquires picture information about the pictures. The creating element may create the reproduction control information in accordance with the picture information acquired by the second acquiring element.

According to another aspect of the invention, there is provided an information creating method for creating information to be provided to a reproducing apparatus for reproducing data. The information creating method includes the steps of acquiring edit point information describing an edit point set for the data, and creating reproduction control information in accordance with the edit point information acquired in the acquiring step, the reproduction control information resulting from an editing process based on the edit point and serving to control reproduction of the data.

According to a further aspect of the invention, there is provided a first program for causing a computer to create information to be provided to a reproducing apparatus for reproducing data. The first program includes the steps of acquiring edit point information describing an edit point set for the data, and creating reproduction control information in accordance with the edit point information acquired in the acquiring step, the reproduction control information resulting from an editing process based on the edit point and serving to control reproduction of the data.

According to an even further aspect of the invention, there is provided a reproducing apparatus including an acquiring element for acquiring reproduction control information, which is created in accordance with edit point information describing an edit point set for data and which serves to control reproduction of the data, and a reproducing element for reproducing the data in accordance with the reproduction control information acquired by the acquiring element.

Preferably, the reproducing apparatus may further include a determining element and a selecting element for use when the reproduction control information includes information for indicating as a reproduction object data, which are relocated by an information creating apparatus for creating the reproduction control information and which are in proximity of the edit point. The determining element may determine a location at which to start reproducing the data in accordance with the reproduction control information. The selecting element may select a decoder for reproducing the data. The reproducing element may reproduce the data based on the reproduction control information, on the starting location determined by the determining element, and on the decoder selected by the selecting element.

Preferably, the reproducing apparatus may further include a determining element for use when the reproduction control information includes information for indicating as a reproduction object data, which are relocated by an information creating apparatus for creating the reproduction control information and which are in proximity of the edit point, and information for designating a decoder for reproducing the data. The determining element may determine a location at which to start reproducing the data in accordance with the reproduction control information. The reproducing element may reproduce the data based on the reproduction control information and on the starting location determined by the determining element.

Preferably, if the reproduction control information includes information for indicating as a reproduction object data, which are relocated by an information creating apparatus for creating the reproduction control information and which are in proximity of the edit point, information for designating a decoder for reproducing the data, and information for designating a location at which to start reproducing the data, then the reproducing element may reproduce the data solely in accordance with the reproduction control information.

According to a still further aspect of the invention, there is provided a reproducing method including the steps of acquiring reproduction control information, which is created in accordance with edit point information describing an edit point set for data and which serves to control reproduction of the data, and reproducing the data in accordance with the reproduction control information acquired in the acquiring step.

According to a yet further aspect of the invention, there is provided a second program, which is readable by a computer, including the steps of acquiring reproduction control information, which is created in accordance with edit point information describing an edit point set for data and which serves to control reproduction of the data, and reproducing the data in accordance with the reproduction control information acquired in the acquiring step.

Where the information creating apparatus, information creating method, and first program according to one embodiment of the invention are in use, edit point information describing edit points set for data is first acquired. Then reproduction control information is created on the basis of the edit point information. The reproduction control information serves to control reproduction of the data resulting from an editing process based on the edit points.

Where the reproducing apparatus, reproducing method, and second program according to one embodiment of the invention are in use, reproduction control information is first acquired after its creation on the basis of edit point information describing edit points set for data. The reproduction control information thus acquired is used to control reproduction of the data.

Further particular and preferred aspects of the present invention are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

The present invention will be described further, by way of example only, with reference to preferred embodiments thereof as illustrated in the accompanying drawings, in which:

FIGS. 1A, 1B, and 1C are schematic views showing how AV data are typically reproduced;
FIG. 2 is a block diagram depicting a structure of a disc apparatus according to an embodiment of the invention;
FIGS. 3A and 3B are schematic views illustrating how a bridge clip is typically created;
FIG. 4 is a tabular view giving a typical edit list;
FIG. 5 is a block diagram indicating a typical structure of a personal computer;
FIG. 6 is a block diagram presenting a typical structure of a reproducing apparatus;
FIG. 7 is a block diagram outlining another typical structure of the reproducing apparatus;
FIG. 8 is a tabular view showing how pictures are typically scheduled for decoding;
FIGS. 9A, 9B, and 9C are schematic views depicting typical decoding by a plurality of decoders;
FIG. 10 is a schematic view giving Nip, the number of I and P pictures to be decoded beforehand regarding each picture to be displayed;
FIG. 11 is a schematic view indicating scheduling conditions;
FIG. 12 is a flowchart of steps constituting a play list creating process performed by the disc apparatus of FIG. 2;
FIG. 13 is a flowchart of steps constituting the play list creating process continued from the process of FIG. 12 and performed by the disc apparatus of FIG. 2;
FIG. 14 is a schematic view of a typical edit list;
FIG. 15 is a tabular view of typical picture pointers;
FIG. 16 is a schematic view showing how a bridge clip is typically created;
FIG. 17 is another schematic view showing how a bridge clip is typically created;
FIG. 18 is a schematic view of a typical play list;
FIG. 19 is a schematic view of another typical play list;
FIG. 20 is a flowchart of steps constituting a reproducing process performed by the reproducing apparatus of FIG. 6;
FIG. 21 is a schematic view indicating how AV data are typically reproduced;
FIG. 22 is a schematic view outlining how AV data are typically displayed;
FIG. 23 is a block diagram sketching another structure of the disc apparatus according to an embodiment of the invention;
FIG. 24 is a block diagram giving another, structure of the reproducing apparatus according to an embodiment of the invention;
FIG. 25 is a flowchart of steps performed by the disc apparatus of FIG. 23;

FIG. 26 is a schematic view of a typical play list created in the steps of FIG. 25;
FIG. 27 is a flowchart of steps constituting a reproducing process carried out by the reproducing apparatus of FIG. 24;
FIG. 28 is a block diagram showing another structure of the disc apparatus according to an embodiment of the invention;
FIG. 29 is a block diagram depicting another structure of the reproducing apparatus according to an embodiment of the invention;
FIG. 30 is a flowchart of steps performed by the disc apparatus of FIG. 28;
FIG. 31 is a schematic view of a typical play list created in the steps of FIG. 30;
FIG. 32 is a flowchart of steps performed by the reproducing apparatus of FIG. 29;
FIG. 33 is a flowchart of other steps performed by the disc apparatus of FIG. 28;
FIG. 34 is a schematic view of a typical play list created in the steps of FIG. 33;
FIG. 35 is a flowchart of other steps performed by the reproducing apparatus of FIG. 29; and
FIG. 36 is a block diagram showing a typical structure of an information processing apparatus.

DETAILED DESCRIPTION OF THE PREFERRED EMBODIMENTS

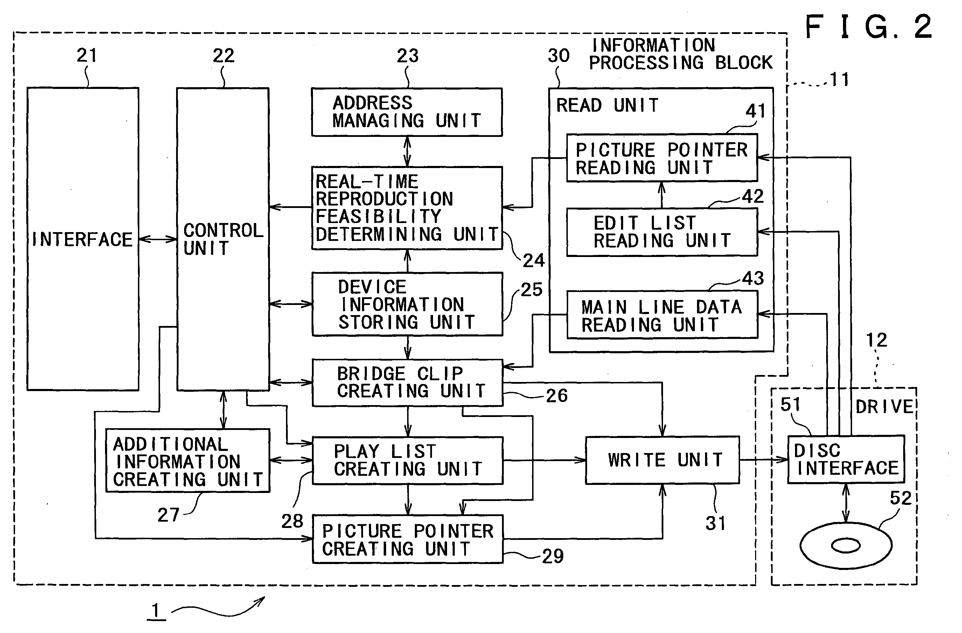

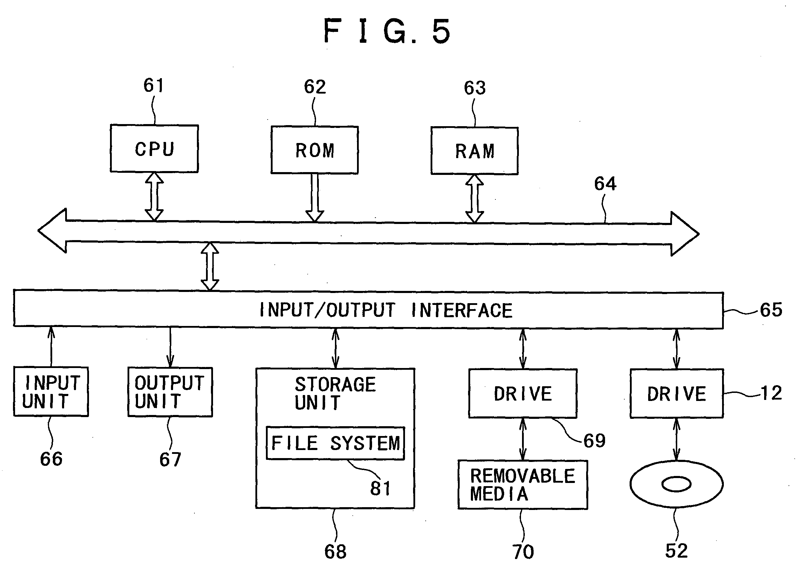

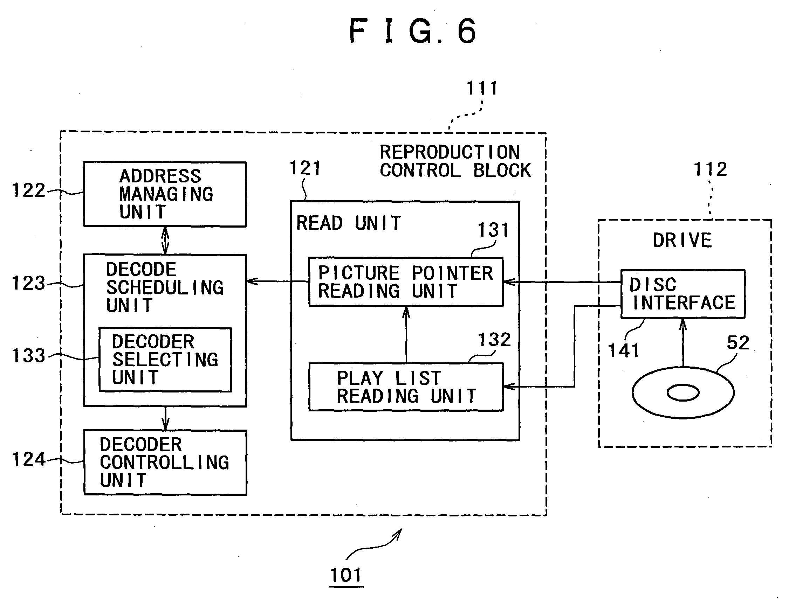

FIG. 2 is a block diagram depicting a typical structure of a disc apparatus 1 (i.e., information creating apparatus) according to an embodiment of the invention. As shown in FIG. 2, the disc apparatus 1 is made up of an information processing block 11 and a drive 12.
The information processing block 11 includes an interface 21, a control unit 22, an address managing unit 23, a real-time reproduction feasibility determining unit 24, a device information storing unit 25, a bridge clip creating unit 26, an additional information creating unit 27, a play list creating unit 28, a picture pointer creating unit 29, a read unit 30, and a write unit 31. An edit list written on an optical disc 52 loaded in the drive 12 is retrieved. A play list is then created on the basis of the retrieved edit list.
The edit list is a list of so-called edit points (i. e., IN and OUT points) set for specific locations of AV (Audio Visual) data recorded on the optical disc 52. The play list is a revised edit list. That is, the edit list is modified into a play list such that the reproducing apparatus upon referencing the list can ensure real-time reproduction of AV data (recorded along with the play list on the optical disc 52) in accordance with the IN and OUT points resulting from a non-destructive editing process and described in the edit list.
The optical disc 52 retains AV data encoded by the MPEG (Moving Picture Experts Group) method, and an edit list created during editing of the AV data. If the reproducing apparatus loaded with the optical disc 52 reproduces the AV data simply in keeping with the edit list, the apparatus may not be capable of real-time reproduction of the AV data because of the above-described problem of prolonged seek times or a freeze taking place depending on where the edit point in question is located.
In order to bypass the above problem, the information processing block 11 modifies the edit list into a play list to ensure real-time reproduction of the AV data recorded on the optical disc 52, and writes the newly created play list to the optical disc 52. Thereafter, the reproducing apparatus (e.g., a reproducing apparatus 101, to be discussed later with reference to FIG. 6) loaded with the optical disc 52 carrying the play list reproduces the AV data recorded on the disc in keeping with the play list also stored on the disc. This ensures real-time reproduction of the AV data.
How a play list is created and how AV data are reproduced in accordance with the created list will be described later in detail with reference to the accompanying flowcharts.
Referring to FIG. 2, the interface 21 controls such components as an operation unit including a keyboard and a mouse, a display unit for displaying pictures, and speakers for outputting sounds (none shown). When a user operates the operation unit, the interface 21 supplies the control unit 22 with signals representing the user's operations. The interface 21 also causes the display unit and speakers to output information that may be fed from the control unit 22.
Illustratively, given operation signals from the interface 21, the control unit 22 controls the real-time reproduction feasibility determining unit 24, device information storing unit 25, bridge clip creating unit 26, additional information creating unit 27, play list creating unit 28, and picture pointer creating unit 29 accordingly.
The address managing unit 23 implemented by a file system 81 (FIG. 5, to be discussed later) manages physical and logical addresses on the optical disc 52. For example, when a logical address of AV data is received from the real-time reproduction feasibility determining unit 24, the address managing unit 23 converts the address into a physical address and outputs the converted address back to the unit 24. Given such a physical address from the address managing unit 23, the real-time reproduction feasibility determining unit 24 determines whether reproduction of the corresponding AV data held on the optical disc 52 is feasible in real time.
More specifically, the real-time reproduction feasibility determining unit 24 determines whether the reproducing apparatus can reproduce in real time the AV data derived from non-destructive editing in accordance with picture pointers and an edit list coming from a picture pointer reading unit 41 or with information from the device information storing unit 25.
As will be described later, picture pointers constitute a table of information to be added to each clip.

The table describes data sizes, file addresses (logical addresses), and picture types of the pictures making up the clip. The picture types include I (Intra pictures), P (Predictive pictures), and B (Bidirectionally predictive pictures).

The device information storing unit 25 accommodates device information denoting the specifications of the reproducing apparatus, and supplies the information to the real-time reproduction feasibility determining unit 24 and bridge clip creating unit 26. The device information stored in the device information storing unit 25 illustratively includes the read rate of an internal disc drive, the size of an internal buffer, an AV data reproduction rate (i.e., decoding speed), and the number of incorporated decoders, all associated with the reproducing apparatus. The device information may be either set by the user operating the operation unit or prearranged to include information about the standardized specifications of the reproducing apparatus.

If the real-time reproduction feasibility determining unit 24 determines that the reproducing apparatus is incapable of real-time reproduction of AV data in a predetermined range (also called a clip, e.g., a series of video data composed of GOP's [Groups Of Pictures]), then the bridge clip creating unit 26 creates a bridge clip based on data from a main line data reading unit 43, in such a manner that the seek time involved will be minimized upon reproduction of the AV data.

As described above, the bridge clip needs to be created in cases where AV data stored discontinuously on the optical disc are to be reproduced continuously and where the time to seek a reproduction object from one discontinuous area to another is predicted to be so prolonged as likely to cause a buffer underflow.

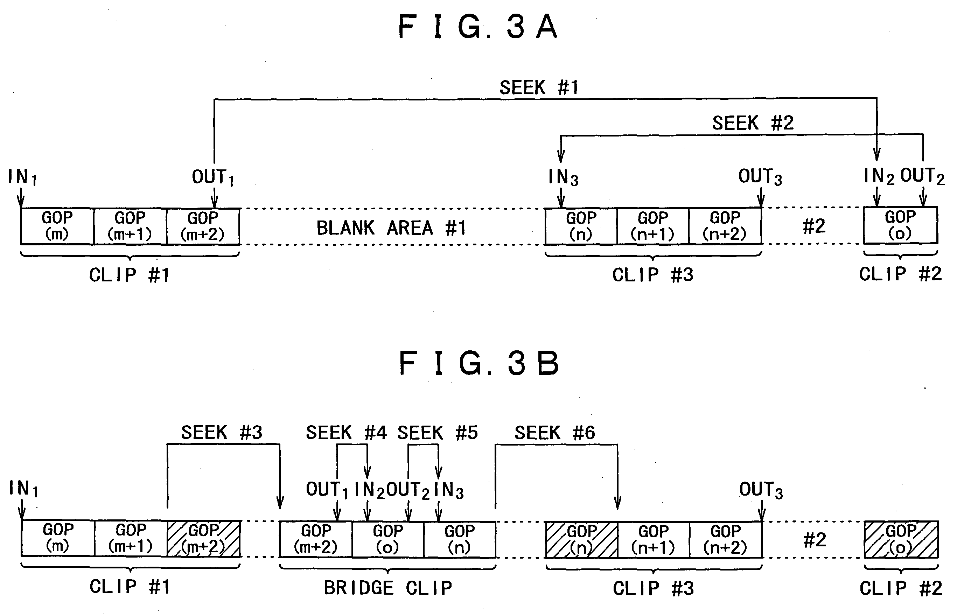

Described below with reference to FIGS. 3A and 3B is how a bridge clip is typically created by the bridge clip creating unit 26. As viewed in FIGS. 3A and 3B, data are read or written from left to right on the optical disc 52.

It is assumed here that an m-th GOP from the beginning of AV data is represented by GOP(m). On that assumption, FIG. 3A indicates three clips: a clip #1 composed of GOP(m), GOP (m+1) , and GOP(m+2); a clip #2 formed by GOP(o); and a clip #3 made up of GOP (n), GOP(n+1), and GOP(n+2). A blank area #1 is formed between GOP(m+2) and GOP(n) and a blank area #2 between GOP(n+2) and GOP(o). Blank areas are often formed on the optical disc 52 if data write and erase operations are carried out repeatedly on the disc.

In the above conditions, suppose the AV data are edited in such a manner that the pictures ranging from the first picture of GOP(m) for which an $IN_1$ point is set, to the picture of GOP(m+2) for which an $OUT_1$ point is set are reproduced first; that the pictures ranging from the picture of GOP(o) for which an $IN_2$ point is set following GOP(m+2), to the subsequent picture of GOP (o) for which an $OUT_2$ point is set are then reproduced; and that the pictures ranging from the picture of GOP(n)

for which an $IN_3$ point is set preceding GOP(o), to the last picture of GOP(n+2) for which an $OUT_3$ point is set are reproduced finally.

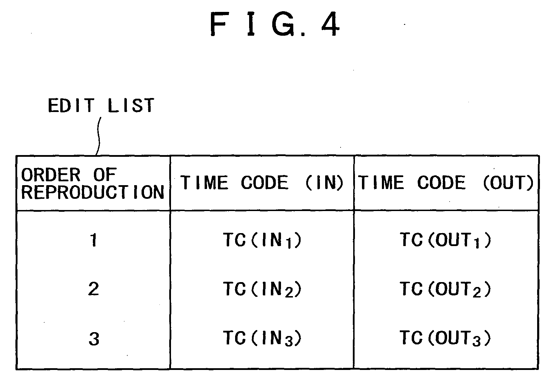

The reproduction above takes place in accordance with an edit list shown in FIG. 4. In FIG. 4, $TC(IN_1)$ and TC ($OUT_1$) denote respectively time codes (TC) of the $IN_1$ and $OUT_1$ points set for the clip #1. $TC(IN_2)$ and $TC(OUT_2)$ represent respectively time codes (TC) of the $IN_2$ and $OUT_2$ points set for the clip #2. Likewise, TC $(IN_3)$ and $TC(OUT_3)$ indicate respectively time codes (TC) of the $IN_3$ and $OUT_3$ points set for the clip #3.

According to the edit list of FIG. 4, the picture designated by $TC(IN_1)$ through the picture designated by $TC(OUT_1)$ are reproduced first; the picture designated by $TC(IN_2)$ through the picture designated by TC $(OUT_2)$ are reproduced next; and the picture designated by $TC(IN_3)$ through the picture designated by $TC(OUT_3)$ are reproduced last. The AV data shown in FIG. 3A are reproduced in that manner.

After the edit list is created in the manner described above, the AV data are reproduced in accordance with the created list. This brings about the desired results of AV data edit word with no need to re-encode the AV data.

Conventionally, AV data irreversibly encoded illustratively by the MPEG method are again decoded so that unnecessary pictures (i.e., pictures outside the range between the IN point and the OUT point) other than the objects of reproduction are removed. The decoded AV data minus the unnecessary pictures need to be re-encoded for editing. By contrast, non-destructive edit work based on the edit list eliminates the need for such conventional intervention and thus prevents degradation of picture quality.

Returning to the explanation of FIG. 3A, the clips #1, #2, and #3 are recorded in discontinuous areas. For that reason, reproduction of the clips in keeping with the edit list of FIG. 4 entails a seek #1 from the $OUT_1$ point of the clip #1 to the $IN_2$ point of the clip #2, and a seek #2 from the $OUT_2$ point of the clip #2 to the $IN_3$ point of the clip #3.

If the seek time involved is prolonged, retrieval of the AV data from the optical disc 52 may fail to keep up with real-time reproduction of the data, as discussed above. That can trigger an interruption of the ongoing AV data reproduction.

The reproducing apparatus typically includes a buffer for temporarily storing (i.e., buffering) the AV data read from the optical disc 52, and a decoder for decoding the buffered AV data. If all buffered AV data have been read out of the buffer by the decoder, a buffer underflow occurs and an interruption of real-time reproduction takes place. In other words, to ensure real-time reproduction requires retaining in the buffer an enough amount of AV data that can be decoded to cover the time period required for a seek that may take place.

In order to circumvent the above problem, the bridge clip creating unit 26 of FIG. 2 relocates parts of clips in units of GOP's into a blank area. This area constitutes a bridge clip made up of a plurality of relocated GOP's. The bridge clip is set to be reproduced by the reproducing apparatus to ensure real-time reproduction.

More specifically, suppose that the AV data in FIG. 3A are reproduced by the reproducing apparatus in keeping with the edit list and that the real-time reproduction feasibility determining unit 24 predicts a buffer underflow occurring during the seek #1 or #2. In that case, the bridge clip creating unit 26 creates a bridge clip by relocating into a blank area #1 a predetermined range of data in the clips to seek, illustratively in units of GOP's, as shown in FIG. 3B.

In the example of FIG. 3B, GOP(m+2) of the clip #1, GOP(o) of the clip #2, and GOP(n) of the clip #3 are relocated into the blank area #1. This forms a bridge clip made up of GOP(m+2), GOP(o), and GOP(n).

After creating the bridge clip in this manner, the disc apparatus 1 modifies the edit list into a play list so that reproduction will take place in reference to the bridge clip. The play list thus created is supplied to the reproducing apparatus along with the AV data.

Given the play list and AV data, the reproducing apparatus reproduces the first picture of GOP(m) through the last picture of GOP(m+1) in accordance with the play list as shown in FIG. 3B, before switching to the bridge clip for the object of reproduction. The reproducing apparatus then reproduces the bridge clip from the first picture of GOP(m+2) to the picture for which the $OUT_1$ point is set, from the picture for which the $IN_2$ point is set to the picture for which the $OUT_2$ point is set in GOP(o), and from the picture of GOP(n) for which the $IN_3$ point is set to the last picture of GOP(n), in that order. After reproducing the bridge clip, the reproducing apparatus reproduces the first picture of GOP(n+1) through the last picture of GOP(n+2) in the clip #3.

It should be noted that in FIG. 3B, the GOP's not to be reproduced are shown shaded.

If the play list is referenced for switching from one picture to another for the object of reproduction, seeks occur in the following order: a seek #3 upon switching from the last picture of GOP(m+1) to the first picture of GOP(m+2) in the bridge clip; a seek #4 upon switching from the picture of GOP(m+2) for which the $OUT_1$ point is set, to the picture of GOP(o) for which the $IN_2$ point is set; a seek #5 upon switching from the picture of GOP(o) for which the $OUT_2$ point is set, to the picture of GOP(n) for which the $IN_3$ point is set; and a seek #6 upon switching from the last picture of GOP(n) to the first picture of GOP (n+1) .

A comparison between FIG. 3A and 3B clearly indicates that the total time required for the seek #3 through the seek #6 in FIG. 3B is appreciably shorter than the time for the seek #1 and seek #2 combined in FIG. 3A, while the displayed pictures are the same. Thus referencing the bridge clip shortens the seek time and helps prevent buffer underflow from taking place.

Returning to the explanation of FIG. 2, the bridge clip creating unit 26 outputs the above-described bridge clip to the write unit 31. In turn, the write unit 31 writes the bridge clip to the disc 52 through a disc interface 51. The bridge clip creating unit 26 also outputs bridge clip-related information such as time codes and addresses associated with bridge clip locations, to the play list creating unit 28 and picture pointer creating unit 29.

The additional information creating unit 27 creates additional information for use in preparing a play list and outputs the created information to the play list creating unit 28. The additional information illustratively includes information for designating the times at which to start decoding clips as well as decoder designation information, i.e., information for specifying which clips are to be decoded by which decoder where the reproducing apparatus has a plurality of decoders.

The play list creating unit 28 creates a play list based on the edit list coming from the control unit 22, on the bridge clip-related information from the bridge clip creating unit 26, and on the additional information from the additional information creating unit 27. The play list is described illustratively using a suitable language based on XML (extensible Markup Language). The play list created by the play list creating unit 28 is output to the picture pointer creating unit 29 and write unit 31.

The picture pointer creating unit 29 creates picture pointers for the clips to be referenced in the play list (as the objects of reproduction) in accordance with the picture pointers supplied from the control unit 22, and outputs the created picture pointers to the write unit 31. The picture pointers regarding all clips recorded on the optical disc 52 are read therefrom by the picture pointer reading unit 41 and sent to the picture pointer creating unit 29 via the real-time reproduction feasibility determining unit 24 and control unit 22.

The read unit 30 is made up of the picture pointer reading unit 41, an edit list reading unit 42, and the main line data reading unit 43. The edit list reading unit 42 reads an edit list from the optical disc 52 and outputs the retrieved edit list to the picture pointer reading unit 41.

Given the edit list from the edit list reading unit 42, the picture pointer reading unit 41 reads from the optical disc 52 the picture pointers for the clips to be referenced in that edit list. The optical disc 52 retains AV data and the picture pointers for the clips constituting the recorded AV data. The picture pointers retrieved by the picture pointer reading unit 41 are output to the real-time reproduction feasibility determining unit 24 together with the edit list.

The main line data reading unit 43 reads main line data (i.e., AV data) from the optical disc 52 via the disc interface 51, and outputs the retrieved main line data to the bridge clip creating unit 26.

Given the bridge clip from the bridge clip creating unit 26, the write unit 31 writes the received bridge clip to a blank area on the optical disc 52 via the drive interface 51. Through the drive interface 51, the write unit 31 also writes to the optical disc 52 the play list created by the play list creating unit 28 and the picture pointers (for the clips to be referenced in the play list) created by the picture pointer creating unit 29.

The drive 12 includes the disc interface 51 and writes and reads data through that interface to and from the optical disc 52 loaded in the drive 12. The optical disc 52 is attached to and detached from the disc drive 12 with ease.

The optical disc 52 illustratively contains AV data acquired by a video camera, and information such as picture pointers for the clips constituting the AV data and an edit list. The optical disc 52 may be a Blu-ray (trademark) disc, a CD (Compact Disc), a DVD (Digital Versatile Disc), or the like.

The structure described above is implemented illustratively by a personal computer outlined in FIG. 5. A CPU (Central Processing Unit) 61 of the PC performs various processes in keeping with programs held in a ROM (Read-Only Memory) 62 or with programs loaded from a storage unit 68 into a RAM (Random Access Memory) 63. The storage unit 68 illustratively contains the file system 81 that is executed to implement the address managing unit 23 of FIG. 2.

The RAM 63 also contains data that may be required by the CPU 61 in carrying out its processes. The CPU 61, ROM 62, and RAM 63 are interconnected via a bus 64. The bus 64 is also connected to an input/output interface 65.

The input/output interface 65 is connected to an input unit 66 illustratively made up of a keyboard and a mouse, and to an output unit 67 constituted by a display such as a CRT (Cathode Ray Tube) or an LCD (Liquid Crystal Display) and by speakers. The user enters instructions by operating the input unit 66. The entered instructions are input to the interface 21 of FIG. 2. The display as part of the output unit 67 illustratively indicates a table of edit lists read from the optical disc 52. The information processing block 11 creates a play list based on the edit list selected from the displayed table.

The input/output interface 65 is further connected to the storage unit 68 such as a hard disc drive, a drive 69, and the drive 12 (FIG. 2). The drive 69 accommodates recording media other than the optical disc 52, such as removable media 70 including a memory card incorporating a flash memory, a magnetic disc, and a magnetic tape. The drive 69 writes and reads data to and from the removable media 70.

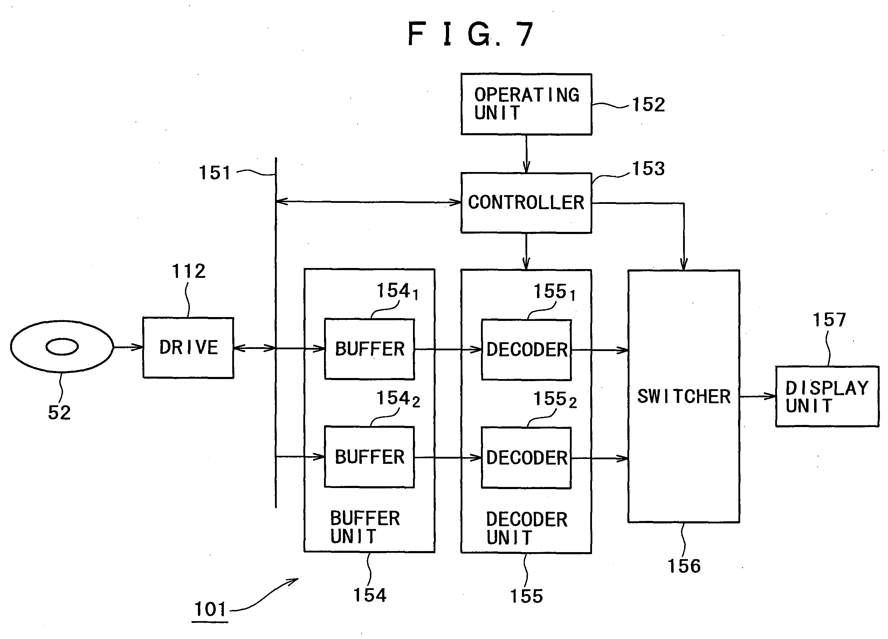

FIG. 6 is a block diagram presenting a typical structure of a reproducing apparatus 101. In FIG. 6, a reproduction control block 111 includes a read unit 121, an address managing unit 122, a decode scheduling unit 123, and a decoder controlling unit 124. These units are implemented by a controller 153 of FIG. 7 carrying out relevant control programs.

The reproduction control block 111 reproduces AV data in accordance with a play list that is held along with the AV data on the optical disc 52 loaded in a drive 112. In addition to the AV data, the optical disc 52 retains picture pointers and play lists for the clips created by the disc apparatus 1.

The read unit 121 is made up of a picture pointer reading unit 131 and a play list reading unit 132. The play list reading unit 132 reads a play list from the optical disc 52 and outputs the retrieved list to the picture pointer reading unit 131.

The picture pointer reading unit 131 reads from the optical disc 52 the picture pointers for the clips referenced in the play list supplied by the play list reading unit 132. The picture pointers read by the picture pointer reading unit 131 are output to the decode scheduling unit 123 together with the play list.

The address managing unit 122 manages physical and logical addresses on the optical disc 52. More specifically, the controller 153 in FIG. 7 has program modules equivalent to the file system 81 of FIG. 5. Carrying out the program modules implements the address managing unit 122. Illustratively, the address managing unit 122 gets a logical address from the decode scheduling unit 123 and converts the received address into a physical address before sending the converted address back to the decode scheduling unit 123.

After acquiring physical addresses of AV data from the address managing unit 122, the decode scheduling unit 123 performs decode scheduling based on the play list and picture pointers supplied from the picture pointer reading unit 131, whereby a decode starting time and a decode starting location (i.e., picture) are determined for each clip.

Furthermore, the decode scheduling unit 123 has its decoder selecting unit 133 determine, which decoder is to start decoding at a predetermined decode starting time. As shown in FIG. 7, the reproducing apparatus 101 has a plurality of decoders (two decoders in the example of FIG. 7). Schedule information for presenting decode starting times and other specifics and decoder designation information for designating the decoder to be used are output to the decoder controlling unit 124.

The decoder controlling unit 124 controls the decoders in accordance with the schedule information and decoder designation information received.

The drive 112 includes a disc interface 141 and writes and reads data through that interface to and from the optical disc 52 loaded in the drive 112.

The above-described structure of the reproduction control block 111 is implemented illustratively by the reproducing apparatus 101 of FIG. 7.

An operation unit 152 is operated by the user. Operation signals corresponding to the user's operations on the unit 152 are output to the controller 153.

The controller 153 controls the disc drive 112, a decoder unit 155, and a switcher 156 in response to the operation signals from the operation unit 152. More specifically, when the controller 153 receives from the operation unit 152 an operation signal requesting the reproduction of AV data in keeping with a play list, the controller 153 requests the disc drive 112 to provide the play list. In response to the request, the disc drive 112 reads the play list from the optical disc 52 and places the retrieved play list onto a bus 151. The controller 153 receives the play list from the bus 151.

The controller 153 (decode scheduling unit 123 in FIG. 6) performs decode scheduling and decoder selection in keeping with the received play list, and controls decoders $155_1$ and $155_2$ for decoding the AV data according to schedule information and decoder designation information. In addition, the controller 153 causes the switcher 156 selectively to output the pictures decoded either by the decoder $155_1$ or by the decoder $155_2$ on the basis of the edit points detected from the play list.

A buffer unit 154 is made up of buffers $154_1$ and $154_2$, which buffer AV data retrieved by the drive 112. The AV data buffered by the buffers $154_1$ and $154_2$ are decoded by the downstream decoders $155_1$ and $155_2$ respectively. Since the play list is described in a way requiring reference to bridge clips where necessary as described above, no buffer underflow occurs in the buffers $154_1$ and $154_2$ during the reproduction based on the play list.

The decoders $155_1$ and $155_2$ constituting the decoder unit 155 request the drive 112 to provide AV data via the bus 151. In response, the drive 112 outputs onto the bus 151 the requested AV data, which are received by the decoders $155_1$ and $155_2$ through the buffers $154_1$ and $154_2$ respectively. The decoders $155_1$ and $155_2$ decode the received AV data under control of the controller 153, and output the decoded pictures to the switcher 156.

It is assumed here that the decoders $155_1$ and $155_2$ making up the decoder unit 155 have standard-speed decoding speed each. The drive 112, which reads AV data from the optical disc 52 and supplies the retrieved data to the buffers $154_1$ and $154_2$ (decoders $155_1$ and $155_2$), is assumed to have a sufficiently high speed (a sufficiently wide band) to sustain the data supply.

Under control of the controller 153, the switcher 156 selects either of the pictures decoded by the decoders $155_1$ and $155_2$ and outputs the selected picture to a display unit 157. The display unit 157 displays the picture output by the switcher 156. That is, of the pictures decoded by the decoders $155_1$ and $155_2$, the one selected by the switcher 156 is displayed on the display unit 157.

What follows is a description of decode scheduling carried out by the decode scheduling unit 123. As discussed above, to decode AV data encoded in the Long GOP structure may require decoding undisplayed pictures, to ensure real-time reproduction. The undisplayed pictures are solely to be referenced in order to ensure the decoding of another picture depending on the picture type (I, P, or B) of the picture for which an IN point is set.

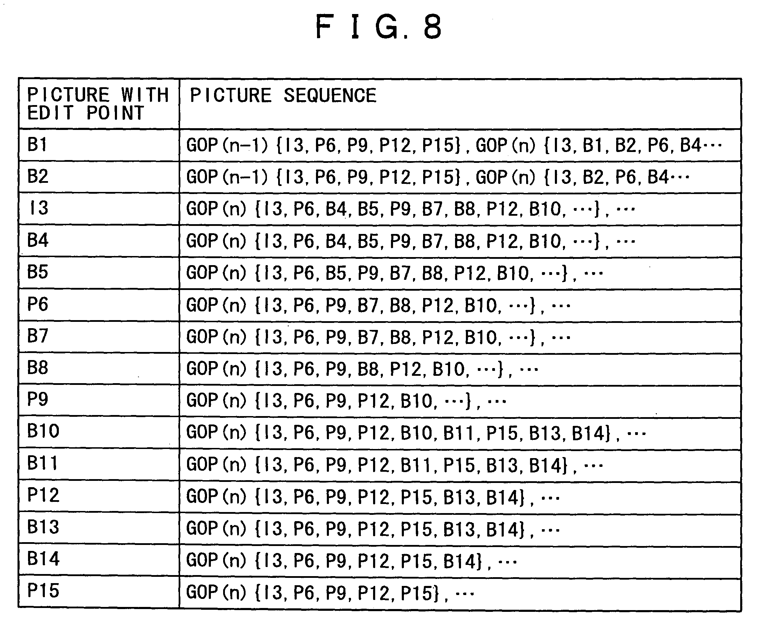

The decode scheduling unit 123 performs decode scheduling as shown in FIG. 8. That is, the decode scheduling unit 123 first detects a picture for which an edit point (IN point) is set based on the play list and picture points furnished by the picture pointer reading unit 131. Depending on the picture for which an edit point is set, the decode scheduling unit 123 determines the sequence of the pictures to be decoded by the decoder $155_1$ or $155_2$. In FIG. 8, an n-th GOP from the beginning of AV data is indicated as GOP(n).

More specifically, where the picture for which an edit point is set is a picture B1 of GOP(n), a minimum of undisplayed but necessary pictures to be decoded preparatory to decoding the picture B1 of GOP(n) are pictures I3, P6, P9, P12, and P15 of GOP(n-1), as shown in FIG. 8. In this case, the decode scheduling unit 123 arranges for the pictures I3, P6, P9, P12, and P15 of GOP(n-1) to be decoded first, in that order, followed by pictures of GOP(n) and on. That is, following the pictures 13, P6, P9, P12, and P15 of GOP(n-1), the decode scheduling unit 123 arranges for the subsequent pictures of GOP(n) and on to be decoded in ordinary decoding order (I3, B1, B2, P6, B4, etc.).

Where the picture for which an edit point is set is the picture B2 of GOP(n), a minimum of undisplayed but necessary pictures to be decoded preparatory to decoding the picture B2 of GOP(n) are the pictures I3, P6, P9, P12, and P15 of GOP(n-1). In that case, the decode scheduling unit 123 would arrange for the pictures I3, P6, P9, P12, and P15 of GOP(n-1) to be decoded first followed by the pictures I3, B1, B2, P6, etc., of GOP(n). However, the picture B1 need not be decoded because it comes before the picture B2 with the edit point in order of display and because the picture B1 is neither displayed nor referenced. In this case, following the pictures I3, P6, P9, P12, and P15 of GOP(n-1), the decode scheduling unit 123 arranges for the picture I3 of GOP (n) to be decoded followed by the pictures B2 and P6, in that order. After that, the decode scheduling unit 123 arranges for the subsequent pictures to be decoded in ordinary decoding order.

Where the picture for which an edit point is set is the picture I3 of GOP(n), there is no need to reference any other picture upon decoding of that picture I3. In this case, decoding is scheduled to start at the picture I3 of GOP(n). There is no need to decode the pictures B1 and B2 located before the picture I3 with the edit point in order of display, because the pictures B1 and B2 are neither displayed nor referenced. Thus the decode scheduling unit 123 arranges for the picture I3 of GOP (n) to be decoded followed by the picture P6, with the pictures B1 and B2 skipped. The subsequent pictures are then scheduled to be decoded in ordinary decoding order.

Where the picture for which an edit point is set is the picture B4 of GOP(n), a minimum of undisplayed but necessary pictures to be decoded preparatory to decoding the picture B4 of GOP(n) is the picture I3 of GOP (n). The decode scheduling unit 123 would then arrange for the picture 13 of GOP(n) to be decoded first followed by the subsequent pictures B1, B2, P6, B4, B5, etc., of GOP(n) in decoding (and encoding) order. However, there is no need to decode the pictures B1 and B2 located before the picture B4 with the edit point in order of display, because the pictures B1 and B2 are neither displayed nor referenced. Thus the decode scheduling unit 123 arranges for the picture 13 of GOP(n) to be decoded first followed by the picture P6 and subsequent pictures in ordinary decoding order, with the pictures B1 and B2 skipped.

Where the picture for which an edit point is set is the picture B5 of GOP(n), a minimum of undisplayed but necessary pictures to be decoded preparatory to decoding the picture B5 of GOP(n) is the picture I3 of GOP (n). The decode scheduling unit 123 would then arrange for the picture I3 of GOP(n) to be decoded first followed by the subsequent pictures B1, B2, P6, B4, B5, etc., of GOP(n) in decoding order. However, there is no need to decode the pictures B1, B2, and B4 located before the picture B5 with the edit point in order of display because the pictures B1, B2, and B4 are neither displayed nor referenced. Thus the decode scheduling unit 123 arranges for the picture I3 of GOP(n) to be decoded first followed by the picture P6, with the pictures B1 and B2 skipped. The decode scheduling unit 123 further arranges for the picture B5 to be decoded followed by the subsequent pictures in ordinary decoding order, with the picture B4 skipped.

Where the picture for which an edit point is set is the picture P6 of GOP(n), a minimum of undisplayed but necessary pictures to be decoded preparatory to decoding the picture P6 of GOP(n) is the picture I3 of GOP (n). The decode scheduling unit 123 would then arrange for the picture I3 of GOP(n) to be decoded first followed by the subsequent pictures B1, B2, P6, B4, B5, etc., of GOP(n) in decoding order. However, there is no need to decode the pictures B1, B2, B4, and B5 located before the picture P6 with the edit point in order of display because the pictures B1, B2, B4, and B5 are neither displayed nor referenced. Thus the decode scheduling unit 123 arranges for the picture I3 of GOP(n) to be decoded first followed by the picture P6, with the pictures B1 and B2 skipped. The decode scheduling unit 123 further arranges for the picture P9 to be decoded followed by the subsequent pictures in ordinary decoding order, with the pictures B4 and B5 skipped.

Where the picture for which an edit point is set is the picture B7 of GOP(n), a minimum of undisplayed but necessary pictures to be decoded preparatory to decoding the picture B7 of GOP(n) are the pictures I3 and P6 of GOP(n). In this case, the decode scheduling unit 123 would arrange for the pictures I3 and P6 of GOP(n) to be decoded first followed by the subsequent pictures B4, B5, P9, B7, B8, etc., of GOP(n) in decoding order. However, there is no need to decode the pictures B4 and B5 located before the picture B7 with the edit point in order of display because the pictures B4 and B5 are neither displayed nor referenced. The decode scheduling unit 123 thus arranges for the picture P6 of GOP(n) to be decoded first followed by the picture P9, with the pictures B4 and B5 skipped. The decode scheduling unit 123 further arranges for the subsequent pictures to be decoded in ordinary decoding order.

Where the picture for which an edit point is set is the picture B8 of GOP(n), a minimum of undisplayed but necessary pictures to be decoded preparatory to decoding the picture B8 of GOP(n) are the pictures I3 and P6 of GOP(n). The decode scheduling unit 123 would then arrange for the pictures I3 and P6 of GOP(n) to be decoded first followed by the subsequent pictures B4, B5, P9, B7, B8, etc., of GOP(n) in decoding order. However, there is no need to decode the pictures B4, B5, and B7 located before the picture B8 with the edit point in order of display because the pictures B4, B5, and B7 are neither displayed nor referenced. Thus the decode scheduling unit 123 arranges for the picture P6 of GOP (n) to be decoded first followed by the picture P9, with the pictures B4 and B5 skipped. The decode scheduling unit 123 further arranges for the picture B8 to be decoded followed by the subsequent pictures in ordinary decoding order, with the picture B7 skipped.

Where the picture for which an edit point is set is the picture P9 of GOP(n), a minimum of undisplayed but necessary pictures to be decoded preparatory to decoding the picture P9 of GOP(n) are the pictures I3 and P6 of GOP(n). The decode scheduling unit 123 would then arrange for the pictures I3 and P6 of GOP(n) to be decoded first followed by the subsequent pictures B4, B5, P9, B7, B8, P12, B10, B11, etc., of GOP(n) in decoding order. However, there is no need to decode the pictures B4, B5, B7, and B8 located before the picture P9 with the edit point in order of display because the pictures B4, B5, B7, and B8 are neither displayed nor referenced. Thus the decode scheduling unit 123 arranges for the picture P6 of GOP(n) to be decoded first followed by the picture P9, with the pictures B4 and B5 skipped. The decode scheduling unit 123 further arranges for the picture P12 to be decoded followed by the subsequent pictures in ordinary decoding order, with the pictures B7 and B8 skipped.

Where the picture for which an edit point is set is the picture B10 of GOP(n), a minimum of undisplayed but necessary pictures to be decoded preparatory to decoding the picture B10 of GOP(n) are the pictures I3, P6, and P9 of GOP(n). The decode scheduling unit 123 would then arrange for the pictures I3, P6, and P9 of GOP(n) to be decoded first followed by the subsequent pictures B7, B8, P12, B10, B11, etc., of GOP(n) in decoding order. However, there is no need to decode the pictures B7 and B8 located before the picture B10 with the edit point in order of display because the pictures B7 and B8 are neither displayed nor referenced. Thus the decode scheduling unit 123 arranges for the picture P9 of GOP(n) to be decoded first followed by the picture P12, with the pictures B7 and B8 skipped. The decode scheduling unit 123 further arranges for the subsequent pictures to be decoded in ordinary decoding order.

Where the picture for which an edit point is set is the picture B11 of GOP(n), a minimum of undisplayed but necessary pictures to be decoded preparatory to decoding the picture B11 of GOP(n) are the pictures I3, P6, and P9 of GOP(n). The decode scheduling unit 123 would then arrange for the pictures 13, P6, and P9 of GOP(n) to be decoded first followed by the subsequent pictures B7, B8, P12, B10, B11, etc., of GOP(n) in decoding order. However, there is no need to decode the pictures B7, B8, and B10 located before the picture B11 with the edit point in order of display because the pictures B7, B8, and B10 are neither displayed nor referenced. Thus the decode scheduling unit 123 arranges for the picture P9 of GOP(n) to be decoded first followed by the picture P12, with the pictures B7 and B8 skipped. The decode scheduling unit 123 further arranges for the picture B11 to be decoded followed by the subsequent pictures in ordinary decoding order, with the picture B10 skipped.

Where the picture for which an edit point is set is the picture P12 of GOP(n), a minimum of undisplayed but necessary pictures to be decoded preparatory to decoding the picture P12 of GOP(n) are the pictures I3, P6, and P9 of GOP(n). The decode scheduling unit 123 would then arrange for the pictures I3, P6, and P9 of GOP(n) to be decoded first followed by the subsequent pictures B7, B8, P12, B10, B11, P15, P13, and B14 of GOP(n) as well as pictures of the next GOP in decoding order. However, there is no need to decode the pictures B7, B8, B10, and B11 located before the picture P12 with the edit point in order of display because the pictures B7, B8, B10, and B11 are neither displayed nor referenced. Thus the decode scheduling unit 123 arranges for the picture P9 of GOP(n) to be decoded first followed by the picture P12, with the pictures B7 and B8 skipped. The decode scheduling unit 123 further arranges for the picture P15 to be decoded followed by the subsequent pictures in ordinary decoding order, with the pictures B10 and B11 skipped.

Where the picture for which an edit point is set is the picture B13 of GOP(n), a minimum of undisplayed but necessary pictures to be decoded preparatory to decoding the picture B13 of GOP(n) are the pictures I3, P6, P9, and P12 of GOP(n). The decode scheduling unit 123 would then arrange for the pictures 13, P6, P9, and P12 of GOP(n) to be decoded first followed by the subsequent pictures B10, B11, P15, B13, and B14 of GOP (n) as well as pictures of the next GOP in decoding order. However, there is no need to decode the pictures B10 and B11 located before the picture B13 with the edit point in order of display because the pictures B10 and B11 are neither displayed nor referenced. Thus the decode scheduling unit 123 arranges for the picture P12 of GOP(n) to be decoded first followed by the picture P15, with the pictures B10 and B11 skipped. The decode scheduling unit 123 further arranges for the subsequent pictures to be decoded in ordinary decoding order.

Where the picture for which an edit point is set is the picture B14 of GOP(n), a minimum of undisplayed but necessary pictures to be decoded preparatory to decoding the picture B14 of GOP(n) are the pictures I3, P6, P9, and P12 of GOP(n). The decode scheduling unit 123 would then arrange for the pictures I3, P6, P9, and P12 of GOP(n) to be decoded first followed by the subsequent pictures B10, B11, P15, B13, and B14 of GOP (n) as well as pictures of the next GOP in decoding order. However, there is no need to decode the pictures B10, B11, and B13 located before the picture B14 with the edit point in order of display because the pictures B10, B11, and B13 are neither displayed nor referenced. Thus the decode scheduling unit 123 arranges for the picture P12 of GOP(n) to be decoded first followed by the picture P15, with the pictures B10 and B11 skipped. The decode scheduling unit 123 further arranges for the picture B14 to be decoded followed by the subsequent pictures in ordinary decoding order, with the picture B13 skipped.

Where the picture for which an edit point is set is the picture P15 of GOP(n), a minimum of undisplayed but necessary pictures to be decoded preparatory to decoding the picture P15 of GOP(n) are the pictures 13, P6, P9, and P12 of GOP(n). The decode scheduling unit 123 would then arrange for the pictures I3, P6, P9, and P12 of GOP(n) to be decoded first followed by the subsequent pictures B10, B11, P15, B13, and B14 of GOP (n) as well as pictures of the next GOP in decoding order. However, there is no need to decode the pictures B10, B11, B13, and B14 located before the picture P15 with the edit point in order of display because the pictures B10, B11, B13, and B14 are neither displayed nor referenced. Thus the decode scheduling unit 123 arranges for the picture P12 of GOP(n) to be decoded first followed by the picture P15, with the pictures B10 and B11 skipped. The decode scheduling unit 123 further arranges for the next GOP (starting with a picture I3) to be decoded followed by the subsequent pictures in ordinary decoding order, with the pictures B13 and B14 skipped.

As described, depending on the type of a picture, which is reached for decoding and for which an edit point (IN point) is found set, the number of pictures required to be decoded for reference before decoding that picture varies. When and where to start decoding a given picture is thus determined by the number of pictures to be decoded in advance of the picture.

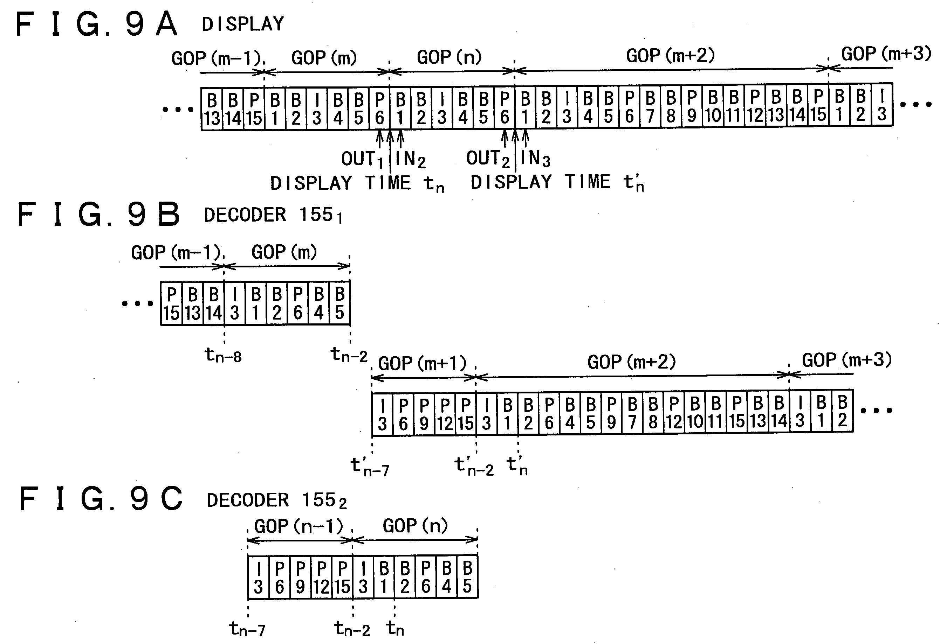

Suppose that, as shown in FIG. 9A, a display of AV data is to be made from a given point $GOP_i$ of the data to a picture P6 of GOP(m) for which an $OUT_1$ point is set, from a picture B1 of GOP(n) for which an $IN_2$ point is set to a picture P6 of GOP(n) for which an $OUT_2$ point is set, and from a picture B1 of GOP(m+2) for which an $IN_3$ point is set to subsequent pictures. In that case, the decode starting time and decode starting location are determined for each of the decoders $155_1$ and $155_2$ as described below.

The decode scheduling unit 123 initially causes one of the two decoders (e.g., decoder $155_1$) to decode pictures I3, B1, B2, P6, B4, and B5 of GOP(m) for display, as indicated in FIG. 9B.

Where the pictures I3, B1, B2, P6, B4, and B5 of GOP(m) are decoded, the decoding of the last picture B5 of GOP(m) is required to be complete before a time $t_{n-2}$ at which to display the picture B5. Given that requirement, the time at which to start decoding GOP(m) is set to a time $t_{n-8}$, earlier than the time $t_{n-2}$ by the length of time during which to display the pictures B1 through P6 of GOP(m).

In FIGS. 9A, 9B, and 9C, a time $t_n$ denotes the time at which the first picture B1 of GOP(n) starts being displayed (i.e., the time at which the display of the picture P6 of GOP (m) ends) . A time $t_{n-i}$ represents the time earlier than the time $T_n$ by the length of time during which to display "i" frames.

After the pictures B1 through P6 of GOP(m) have been decoded by the decoder $155_1$ and displayed, the $OUT_1$ point is reached as shown in FIG. 9A. It then becomes necessary to decode and display the pictures B1 through P6 of GOP(n) starting at the $IN_2$ point and ending at the $OUT_2$ point.

It is the picture B1 of GOP(n) for which the $IN_2$ point is set. Thus the decode scheduling unit 123 causes the other decoder $155_2$ to decode pictures I3, P6, P9, P12, and P15 of GOP(n-1) preceding GOP(n) and then to decode pictures I3, B1, B2, P6, B4, and B5 of GOP (n), as shown in FIG. 9C. The decoding procedure involved is as discussed above with reference to FIG. 8. As a result, the decode starting location is set to the picture I3 of GOP (n-1).

Where the pictures I3, B1, B2, P6, B4, and B5 of GOP(n) are decoded, the decoding of the picture B1 for which the $IN_2$ point is set is required to be complete before the time $t_n$ at which the picture B1 is to be displayed. Given that requirement, the decode scheduling unit 123 determines for the decoder $155_2$ a decode starting time such that the decoder starts decoding the picture I3 of GOP(n-1), seven pictures earlier than the picture B1 of GOP(n), before a time $t_{n-7}$ that is earlier than the time $t_n$ by the length of time during which to display seven pictures.

Meanwhile, the decoder $155_1$ decodes the pictures I3, B1, B2, P6, B4, and B5 of GOP(m) before terminating its decoding process. After the decoder $155_2$ has decoded the picture B5 of GOP(n) and the previously decoded picture P6 has been displayed, the $OUT_2$ point is reached as shown in FIG. 9A. Then GOP(m+2) starting at the $IN_3$ point and subsequent GOP's must be decoded and displayed.

Since the $IN_3$ point is set for the picture B1 of GOP(m+2), the decode scheduling unit 123 causes the decoder $155_1$ to decode the pictures I3, P6, P9, P12, and P15 of GOP(m+1) preceding GOP(m+2) and then to decode the pictures I3, B1, B2, P6, B4, B5, etc., of GOP(m+2), as shown in FIG. 9B. The decoding procedure involved is as discussed above with reference to FIG. 8. Thus the decode scheduling unit 123 sets the decode starting location to the picture I3 of GOP(m+1) for the decoder $155_1$.

Where GOP(m+2) is decoded, the picture B1 for which the $IN_3$ point is set needs to have been decoded before its display time $t'_n$. Thus the decode scheduling unit 123 determines for the decoder $155_1$ a decode starting time such that the decoder starts decoding the picture I3 of GOP(m+1), seven pictures earlier than the picture B1 of GOP(m+2), before a time $T'_{n-7}$ that is earlier than the time $t'_n$ by the length of time during which to display seven pictures.

In FIGS. 9A, 9B, and 9C, the time $t'_n$ denotes the time at which to start displaying the first picture B1 of GOP(m+2)(i.e., the time at which display of the picture P6 of GOP (n) ends). A time $t'_{n-i}$ represents the time earlier than the time $t'_n$ by the length of time during which to display as many as "i" frames.

As described above, the decode scheduling unit 123 calculates the number of pictures that need to be decoded before displaying a given picture for which an edit point is set, and establishes the first of the pictures to be decoded beforehand as the decode starting point. The decode scheduling unit 123 then establishes the decode starting time as a point in time earlier than the time at which to display the picture with the edit point, by the length of time during which to decode the calculated number of pictures.

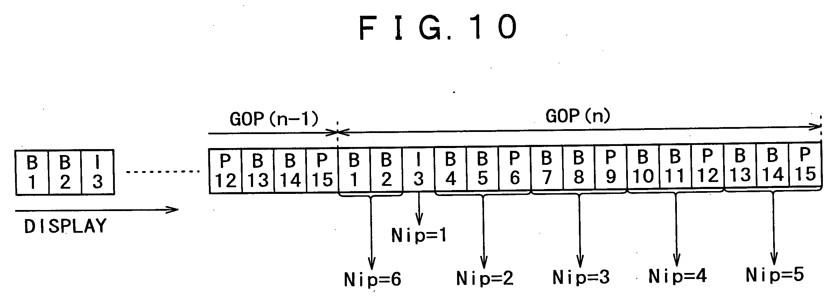

FIG. 10 is a schematic view illustratively showing the number of pictures to be decoded before displaying each of the pictures for which edit points are set. As shown in FIG. 10, the number of pictures that need to be decoded before displaying a given picture for which an edit point is set corresponds to the number of I and P pictures that exist between the picture with the edit point and the most recent I picture encountered. In FIG. 10, where the picture for which an edit point is set is an I picture or a P picture, the number of I and P pictures between that picture with the edit point (inclusive) and the most recent I picture is assumed to be represented by Nip.

Illustratively, where an edit point is set for a picture B1 or B2 of GOP(n) in FIG. 10, there are six pictures to be decoded, i.e., pictures I3, P6, P9, P12, and P15 of GOP(n-1) and a picture I3 of GOP(n), preparatory to decoding the picture B1 or B2. In this case, the number Nip is 6.

Where an edit point is set for the picture I3 of GOP(n), there is no need to reference other pictures preparatory to decoding the picture I3, In this case, the number Nip is 1, representing the picture I3 itself.

Where an edit point is set for a picture B4 or B5 of GOP(n), there are two pictures to be decoded, i.e., pictures I3 and P6 of GOP(n), preparatory to decoding the picture B4 or B5. In this case, the number Nip is 2.

Where an edit point is set for the picture P6 of GOP(n), the picture 13 of GOP(n) needs to be decoded preparatory to decoding the picture P6. In this case, the number Nip is 2, representing the picture I3 plus the picture P6.

Where an edit point is set for a picture B7 or B8 of GOP(n), there are three pictures to be decoded, i.e., pictures I3, P6, and P9 of GOP(n), preparatory to decoding the picture B7 or B8. Thus the number Nip is 3.

Where an edit point is set for the picture P9 of GOP(n), there are two pictures to be decoded, i.e., pictures I3 and P6 of GOP(n), preparatory to decoding the picture P9. Then the number Nip is 3, representing the two pictures plus the picture P9 itself.

Where an edit point is set for a picture B10 or B11 of GOP(n), there are four pictures to be decoded, i.e., pictures I3, P6, P9, and P12 of GOP(n), preparatory to decoding the picture B10 or B11. Thus the number Nip is 4.

Where an edit point is set for the picture P12 of GOP(n), there are three pictures to be decoded, i.e., pictures I3, P6, and P9 of GOP(n), preparatory to decoding the picture P12. In this case, the number Nip is 4, representing the three pictures plus the picture P12 itself.

Where an edit point is set for a picture B13 or B14, there are five pictures to be decoded, i.e., pictures I3, P6, P9, P12, and P15 of GOP(n), preparatory to decoding the picture B13 or B14. Thus the number Nip is 5.

Where an edit point is set for the picture P15 of GOP(n), there are four pictures to be decoded, i.e., pictures I3, P6, P9, and P12 of GOP(n), preparatory to decoding the picture P15. Then the number Nip is 5, representing the four pictures plus the picture P15 itself.

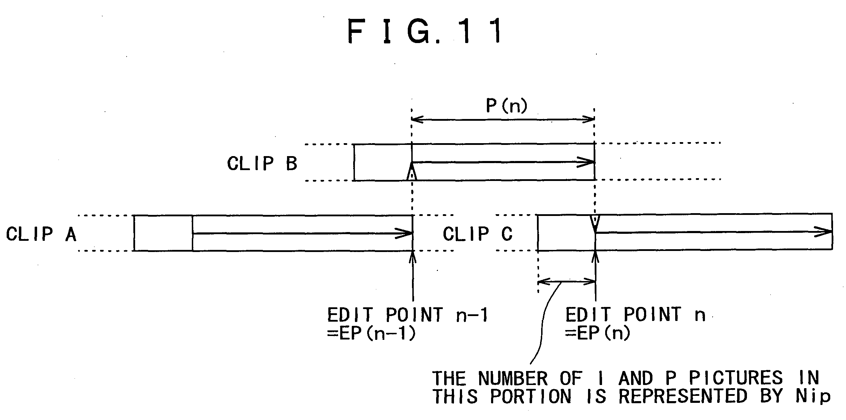

FIG. 11 is a schematic view indicating typical conditions for decode scheduling. It is assumed here that EP(n-1) denotes the location of an edit point n-1 preceding an edit point n; and that a clip A stands for the clip having an OUT point at EP(n-1), a clip B for the clip having an OUT point at EP(n), and a clip C for the clip having an IN point at EP(n). It is also assumed that P(n) represents the number of pictures to be displayed out of the clip B and that the above-mentioned number Nip denotes the number of pictures to be decoded preparatory to displaying that picture of the clip C for which the IN point is set.

In the case above, the reproducing apparatus 101 having two decoders (such as the one shown in FIG. 7) performs its decode scheduling in such a manner as to meet the different conditions below depending on whether the clip A and clip C are different or the same.

(1) Where the clip A and clip C are different, the condition

$$P\,(n) \geqq Nip$$

should be met. More specifically, if the clip A and clip C are different, it is necessary for one of the two decoders to decode "P(n)" pictures and for the other decoder to decode parallelly "Nip" pictures before displaying that picture of the clip C for which the IN point is set. Decode scheduling is made so as to meet that requirement.

(2) Where the clip A and clip C are in fact the same clip, one of two conditions (a) and (b) below should be met.

(a) The time difference between the IN point of the clip C and the OUT point of the clip A should be shorter than the display time of P (n) .

More specifically, given that the clip A and clip C are in fact the same clip, if the time difference between the IN point of the clip C and the OUT point of the clip A is shorter than the display time of P(n), then it is possible to decode pictures continuously from the OUT point of the clip A through the IN point of the clip C (inclusive) without triggering a seek from the OUT point to the IN point so that decoding of the picture of the clip C for which the IN point is set will have ended by the time that picture is to be displayed.

(b) If the condition (a) above is not met, then the condition (1) above should be satisfied.

If the time difference between the IN point of the clip C and the OUT point of the clip A is longer than the display time of P(n), then it is necessary to decode "Nip" pictures before displaying that picture of the clip C for which the IN point is set, as mentioned above.

The reproducing apparatus 101 carries out decode scheduling in the manner described above, decoding AV data in accordance with schedule information representative of the results of the scheduling. Implementing such decode scheduling averts the freeze of displayed pictures (e.g., state of FIG. 1C) and thereby ensures real-time reproduction.

In the foregoing description, the reproducing apparatus 101 was shown having two decoders of a standard decoding speed capability each. If three or more decoders are provided, the picture count P(n) is defined as

$$P(n) = EP(n) - EP(n-DN+1)$$

where DN stands for the number of decoders. In this case, the condition (1) above is modified into

$$P(n) \geqq Nip/DS$$

where DS represents the decoding speed.

How the disc apparatus 1 and reproducing apparatus 101 of the structures explained above operate will now be described with reference to the accompanying flowcharts.

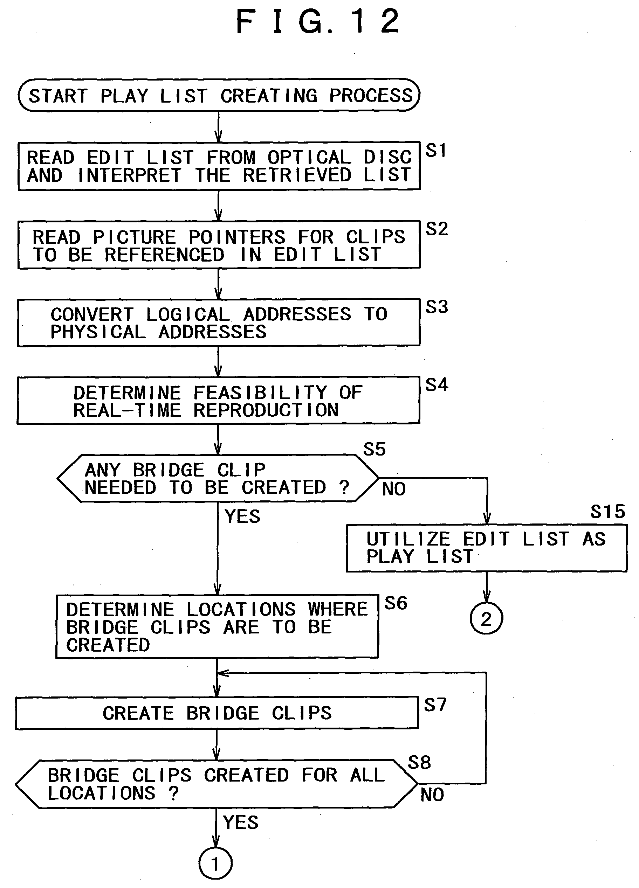

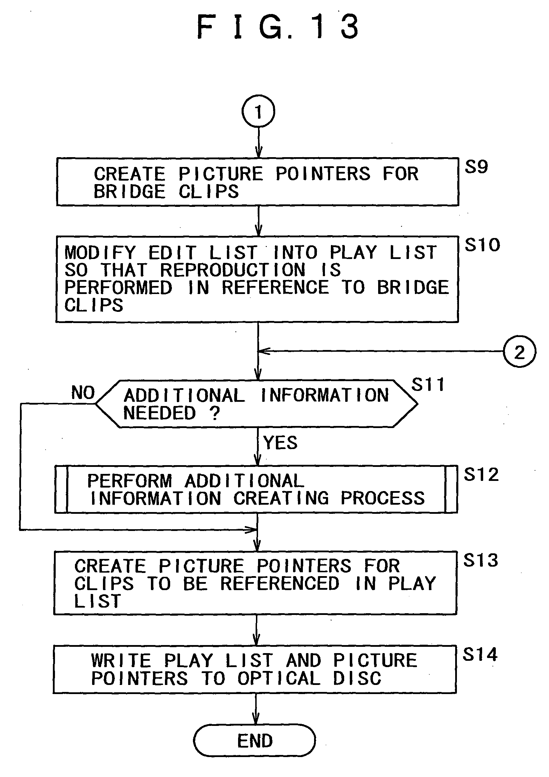

Described first with reference to the flowcharts of FIGS. 12 and 13 is a play list creating process performed by the disc apparatus 1 of FIG. 2.

Illustratively, the play list creating process is carried out when the optical disc 52 with AV data and edit lists recorded thereon is loaded into the drive 12 and a relevant edit list is selected from among the recorded edit lists for conversion into a play list.

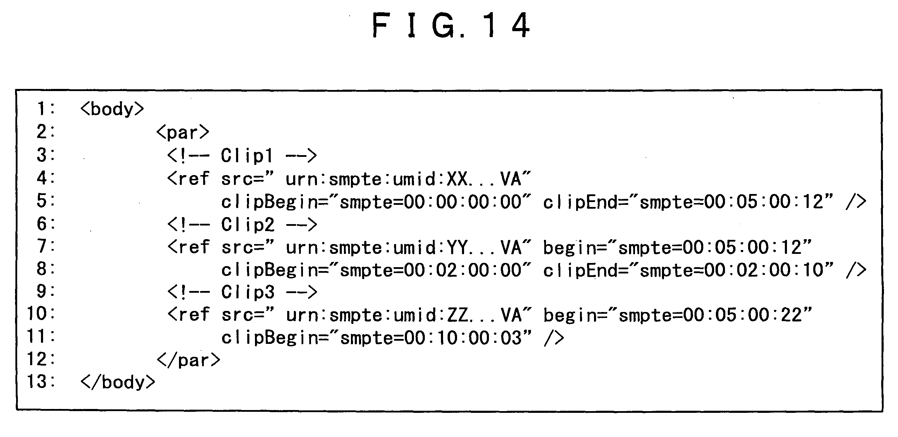

In step S1 of FIG. 12, the edit list reading unit 42 reads and interprets an edit list that is recorded on the optical disc 52. More specifically, the edit list reading unit 42 reads an edit list such as one shown in FIG. 14 from the disc and converts the retrieved edit list into a format that can be processed by the information processing block 11.

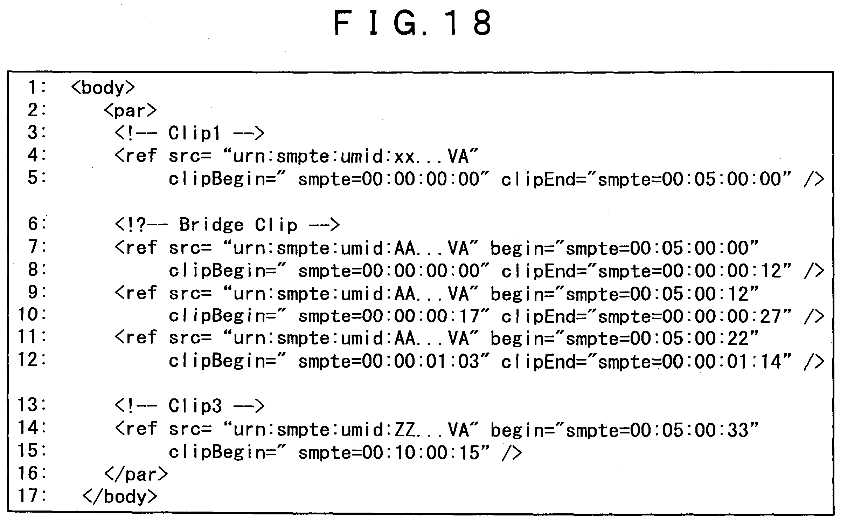

FIG. 14 shows a partial code structure of a typical edit list ranging from a <body> tag, which is a starting tag, to another <body> tag, an ending tag. In FIG. 14, each of the lines shown is prefixed with a number and a colon (:) symbol. These numbers and symbols are provided for purpose of explanation and are not part of the code. The same applies to FIGS. 18, 19, 26, 31, and 34 as well.

As mentioned above, the edit list represents edit point locations (time code). A typical list content is described from a <par> tag on line 2 to </par> tag on line 12 in FIG. 14.

A notation [<!--Clip1-->] on line 3 indicates that a code regarding a clip #1 is described on lines 4 and 5.

Of the notations on lines 4 and 5 made up of [<ref src="urn:smpte:umid:XX...VA" clipBegin="smpte=00:00:00:00" clipEnd="smpte=00:05:00:12"/>], the portion [ref src="urn:smpte:umid:XX...VA"] indicates that the portion [umid:XX...VA](file name of clip #1) defined by SMPTE (Society of Motion Picture and Television Engineers) standards is to be an object of reproduction. The portion [clipBegin="smpte=00:00:00:00"] indicates that an IN point of the clip #1 is set to [TC=00:00:00:00] with reference to a given point in time. The portion [clipEnd="smpte=00:05:00:12"] indicates that an OUT point of the clip #1 is set to [TC=00:05:00:12].

The term "umid" (unique material identifier) represents a unique ID, the one and only in the world, given to a data item to be referenced. There are two types of umid (UMID): Basic UMID and Extended UMID. The Basic UMID constitutes a unique ID given to AV data or other materials. The Extended UMID forms an attachment to the Basic UMID and represents a source pack (e.g., time, location, name of the person who obtained data, etc.). As such, the Extended UMID is used to denote characteristics of pictures or to be referenced for search purposes.

A notation [<!--Clip2-->] on line 6 indicates that a code regarding a clip #2 is described below on lines 7 and 8.

Of the notations on lines 7 and 8 made up of [<ref src="urn:smpte:umid:YY...VA" begin="smpte=00:05:00:12" clipBegin="smpte=00:02:00:00." clipEnd="smpte=00:02:00:10"/>], the portion [ref src="urn:smpte:umid:YY...VA"] indicates that the file name of the clip #2 is [umid:YY...VA]. The portion [begin="smpte=00:05:00:12"] indicates that reproduction of the clip #2 is to begin at [TC=00:05:00:12].

The portion [clipBegin="smpte:00:02:00:00"] indicates that an IN point of the clip #2 is set to [TC=00:02:00:00]. The portion [clipEnd="smpte:00:02:00:10"] indicates that an OUT point of the clip #2 is set to [TC=00:02:00:10].

A notation [<!--Clip3-->] on line 9 indicates that a code regarding a clip #3 is described below on lines 10 and 11.

Of the notations on lines 10 and 11 made up of [<ref src="urn:smpte:umid:ZZ...VA" begin="smpte=00:05:00:22" clipBegin="smpte=00:10:00:03"/>], the portion [ref src="urn:smpte:umid:ZZ...VA"] indicates that the file name of the clip #3 is [umid:ZZ...VA]. The portion [begin="smpte=00:05:00:22"] indicates that reproduction of the clip #3 is to begin at [TC=00:05:00:22].

The portion [clipBegin="smpte:00:10:00:03"] indicates that an IN point of the clip #3 is set to [TC=00:10:00:03].

As described, the edit list recorded on the optical disc 52 and a play list created on the basis of that list are described illustratively in an XML-based edit description language.

The edit list retrieved by the edit list reading unit 42 is converted to a predetermined format. The edit list thus converted is output to the picture pointer reading unit 41.

In step S2, given the edit list from the edit list reading unit 42, the picture pointer reading unit 41 reads from the optical disc 52 the picture pointers for the clips to be referenced in that edit list. For example, if the edit list reading unit 42 supplies the picture pointer reading unit 41 with the edit list of FIG. 14 referencing the clips #1 through #3, then the picture pointer reading unit 41 acquires the picture pointers for the clips #1 through #3.

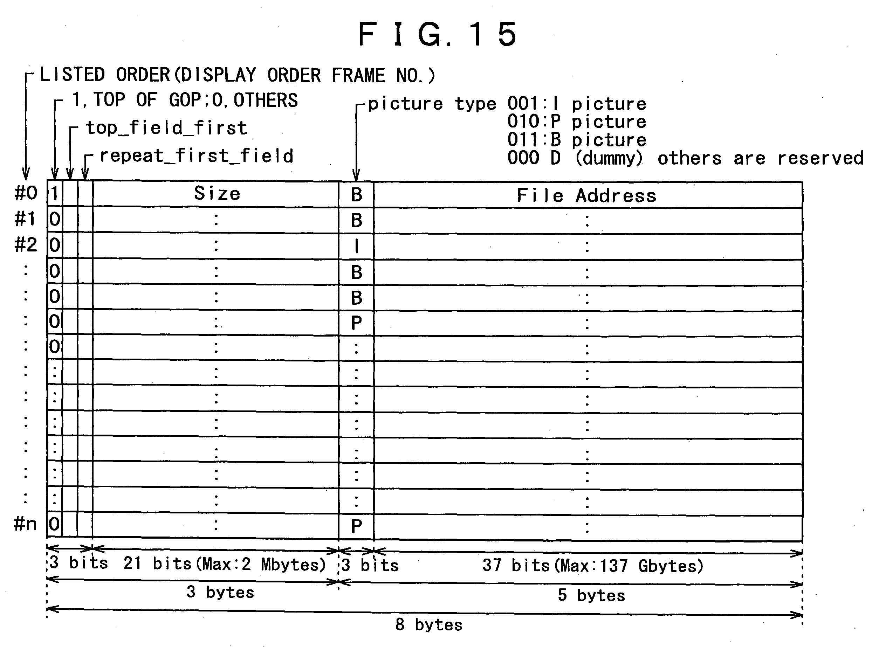

FIG. 15 is a tabular view showing typical picture pointers. A table of information shown in FIG. 15 is created as a picture pointer illustratively for each clip at the time of recording (i.e., encoding) AV data and is recorded onto the optical disc 52. This table is constituted by a plurality of entries of a fixed size each. In the example of FIG. 15, each entry is eight bytes long.

One entry accommodates information about one picture. The entries hold information about pictures in the order in which they are to be displayed.

The information about each picture is prefixed with a GOP starting flag, a top_field_first flag, and a repeat_first_field flag of one bit each. In the example of FIG. 15, a GOP starting flag "1" indicates that the corresponding picture is located at the beginning of the GOP in question; a GOP starting flag "0" indicates that the corresponding picture is not at the beginning of the GOP.

The three flags above are followed by a data size field that records the size of each picture in 21 bits.

The data size field is followed by a picture type field describing the type of the corresponding picture in three bits. A picture type "001" indicates that the picture in question is an I picture; a picture type "010" indicates that the picture is a P picture; a picture type "011" indicates that the picture is a B picture; and a picture type "000" indicates that the picture is a dummy picture.

The picture type field is followed by a file address field describing in 37 bits a starting file address (logical address) of the picture in question.

The picture pointers retrieved by the picture pointer reading unit 41 are output to the real-time reproduction feasibility determining unit 24 together with the edit list.

In order to determine whether the reproducing apparatus 101 can reproduce AV data in real time, the real-time reproduction feasibility determining unit 24 needs the physical address of each picture on the optical disc 52. Thus the real-time reproduction feasibility determining unit 24 outputs to the address managing unit 23 the file addresses (i.e., logical addresses) described in the picture pointers fed from the picture pointer reading unit 41.

In step S3, the address managing unit 23 converts each logical address coming from the real-time reproduction feasibility determining unit 24 into a physical address, and sends the acquired physical address back to the real-time reproduction feasibility determining unit 24.

The real-time reproduction feasibility determining unit 24 acquires the physical address (of each picture) from the address managing unit 23. In step S4, the real-time reproduction feasibility determining unit 24 determines whether the reproducing apparatus 101 can reproduce in real time each AV data item referenced in the edit list in accordance with the edit point of the data item (i.e., real-time reproduction feasibility is determined here). The determination of real-time reproduction feasibility in step S4 is carried out for each of all locations where a seek is predicted to occur.

At this point, the real-time reproduction feasibility determining unit 24 is being supplied with such information as the buffer size and decoding speed of the reproducing apparatus 101 from the device information storing unit 25. The information is utilized as a basis for determining the feasibility of real-time reproduction.

Details about techniques of determining real-time reproduction feasibility are disclosed illustratively in Japanese Patent Applications Nos. 2002-366197 and 2002-366199. The techniques described in these applications may be applied to the determination of real-time reproduction feasibility carried out by the disc apparatus 1 of FIG. 2. Obviously, other diverse techniques may be adopted instead. One such technique would involve having AV data reproduced in virtual fashion under the same conditions as those of the reproducing apparatus 101 so that the real-time reproduction feasibility determining unit 24 may determine whether the virtual reproduction can be performed by the reproducing apparatus 101 in real time.

In step S5, the real-time reproduction feasibility determining unit 24 determines whether it is necessary to create any bridge clip based on the result of the determination of real-time reproduction feasibility.

If the seek time involved is found to be too long for the reproducing apparatus 101 to perform real-time reproduction in keeping with the edit list, as described above with reference to FIGS. 3A and 3B, the real-time reproduction feasibility determining unit 24 determines in step S5 that bridge clips need to be created. From step S5, the real-time reproduction feasibility determining unit 24 goes to step S6. At this point, such information as the edit list, picture pointers, and the physical address of each picture is output to the bridge clip creating unit 26 through the control unit 22.

In step S6, the bridge clip creating unit 26 determines the locations at which to create bridge clips in accordance with the result of the determination of real-time reproduction feasibility.

In step S7, the bridge clip creating unit 26 creates bridge clips illustratively in units of GOP's at the locations determined in step S6.

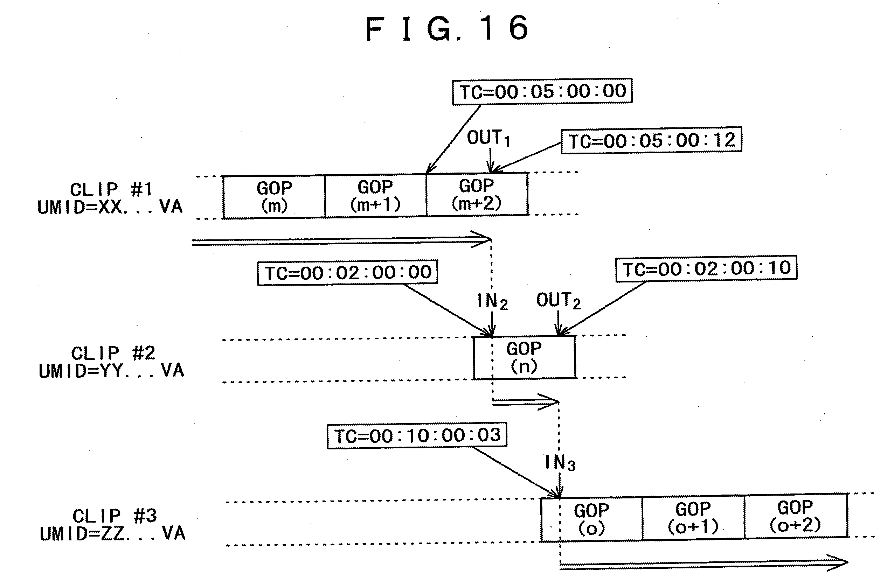

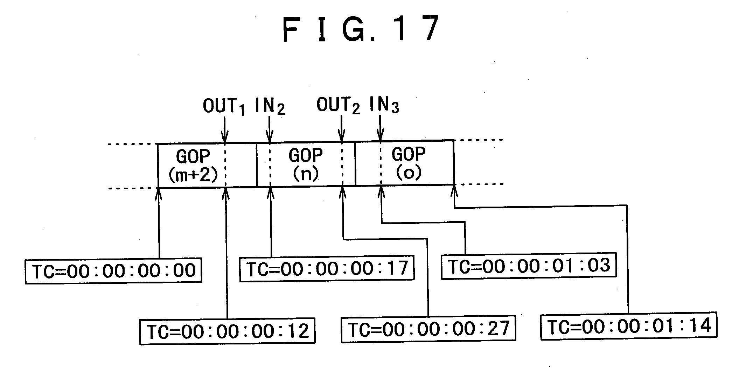

FIGS. 16 and 17 show typical orders in which a bridge clip is created. Hollow arrows in FIG. 16 indicate a typical order in which pictures are displayed. More specifically, picture display proceeds first from a $GOP_i$ to the picture of GOP(m+2) for which an $OUT_1$ point is set, then from the picture of GOP(n) for which an $IN_2$ point is set to the picture of GOP(n) for which an $OUT_2$ point is set, and from the picture of GOP(o) for which an $IN_3$ point is set to subsequent pictures of $GOP_j$.

In the example of FIG. 16, if the starting location of $GOP_i$ is assumed to be [TC=00:00:00:00] , then the beginning of GOP(m+2) is defined as [TC=00:05:00: 00]. The $OUT_1$ point is set to [TC=00:05:00:12], $IN_2$ point to [TC=00:02:00:00], $OUT_2$ point to [TC=00:02:00:10], and $IN_3$ point to [TC=00:10:00:03]. It follows that the $IN_2$ and $OUT_2$ points are located temporally before the $OUT_1$ point and that the $IN_3$ point is located temporally after the $OUT_1$ point. In other words, the display in the example of FIG. 16 is based on the edit list of FIG. 14.

Illustratively, suppose the real-time reproduction feasibility determining unit 24 determines that the seek time between the $OUT_1$ point and the $IN_2$ point or between the $OUT_2$ point and the $IN_3$ point is too long for the reproducing apparatus 101 to reproduce the clips in real time in the order indicated by the hollow arrows in FIG. 16. In that case, the bridge clip creating unit 26 creates a bridge clip made up of GOP(m+2) of the clip #1, GOP(n) of the clip #2, and GOP(o) of the clip #3 as shown in FIG. 17, in a blank area of the optical disc 52.

In the example of FIG. 17, if the beginning of GOP(m+2) is assumed to be [TC=00:00:00:00], then the OUT$_1$ point set for GOP(m+2) is defined as [TC=00:00:00:12]. On that assumption, the IN$_2$ and OUT$_2$ points set for GOP(n) are defined as [TC=00:00:00:17] and [TC=00:00:00:27] respectively. The IN$_3$ point set for GOP(o) is defined as [TC=00:00:01:03] and the ending location of GOP(o) as [TC=00:00:01:14].

Bridge clips are created in the manner described above for all locations where these clips are deemed necessary (i.e., locations where the seek time involved is inordinately long). The edit list is then modified so that the AV data will be reproduced in reference to the created bridge clips.

The bridge clips created by the bridge clip creating unit 26 are output to the write unit 31 and written thereby to the optical disc 52 via the disc interface 51. Bridge clip-related information such as the locations where the bridge clips are created and the file names of the bridge clips is output to the play list creating unit 28 and picture pointer creating unit 29.

In step S8, the bridge clip creating unit 26 determines whether bridge clips have been created for all locations. If bridge clips have yet to be created for all locations, step S7 is reached again and the bridge clip creating unit 26 creates more bridge clips for the necessary locations.

If in step S8 the bridge clip creating unit 26 determines that the bridge clips have been created for all locations, control is passed on to step S9 in FIG. 13. In step S9, the picture pointer creating unit 29 creates picture pointers for the bridge clips. More specifically, given the picture pointers from the control unit 22 (i.e., picture pointers read by the picture pointer reading unit 41 for the clips to be referenced in the edit list), the picture pointer creating unit 29 extracts therefrom solely information about the pictures making up the bridge clips. The extracted information constitutes the picture pointers for the bridge clips. The picture pointers created in this step are part of the picture pointers that are created later in step S13.

In step S10, the play list creating unit 28 modifies the edit list supplied from the control unit 22 into a play list in such a manner that data will be reproduced by referencing the bridge clips.

FIG. 18 shows a typical play list obtained by modifying the edit list of FIG. 14 in such a manner that the bridge clip in FIG. 17 will be referenced. In explaining the edit list of FIG. 18 below, descriptions of the portions that were also found in FIG. 14 may be omitted where redundant.

Lines 3 through 5 in FIG. 18 constitute a code regarding the clip #1 (Clip1); lines 6 through 12 make up a code regarding a newly created bridge clip (Bridge Clip); and lines 13 through 15 form a code regarding the clip #3 (Clip3). In this play list, the newly created bridge clip is the object to be reproduced.

More specifically, lines 4 and 5 in FIG. 18 with [<ref src="urn:smpte:umid:XX...VA" clipBegin="smpte:00:00:00:00" clipEnd="smpte=00:05:00:00"/>] indicate that the clip #1 designated by [umid:XX...VA] is to be reproduced from [TC=00:00:00:00] to [TC=00:05:00:00] (i.e., from GOP$_i$, not shown, to the last picture of GOP (m+1) in FIG. 16).

Line 6 with [<!?--Bridge Clip-->] indicates that a code regarding the bridge clip is described from line 7 through line 12.

Line 7 with <ref src="urn:smpte:umid:AA...VA" begin="smpte=00:05:00:00"] indicates that reproduction of the bridge clip designated by [umid:AA...VA] is to begin at [TC=00:05:00:00].

Line 8 with [clipBegin="smpte=00:00:00:00" clipEnd="smpte=00:00:00:12"/] indicates that the pictures ranging from [TC=00:00:00:00] to [TC=00:00:00:12](i.e., the first picture of GOP(m+2) through the picture of the OUT$_1$ point (FIG. 17) therein constituting part of the bridge clip) are to be reproduced with reference to a point in time within the bridge clip.

Line 9 with [<ref src="urn:smpte:umid:AA...VA" begin="smpte=00:05:00:12"] indicates that reproduction of the portion designated by a code on line 10 is to begin at [TC=00:05:00:12].

Line 10 with [clipBegin="smpte=00:00:00:17" clipEnd="smpte=00:00:00:27"/] indicates that the pictures ranging from [TC=00:00:00:17] to [TC=00:00:00:27](i.e., pictures from the IN$_2$ point to the OUT$_2$ point (FIG. 17) constituting part of the bridge clip) are to be reproduced with reference to a point in time within the bridge clip.

Line 11 with [<ref src="urn:smpte:umid:AA...VA" begin="smpte=00:05:00:22"] indicates that reproduction of the portion designated by a code on line 12 is to begin at [TC=00:05:00:22].

Line 12 with [clipBegin="smpte=00:00:01:03" clipEnd="smpte=00:00:01:14"/] indicates that the pictures ranging from [TC=00:00:01:03] to [TC=00:00:01:14](i.e., pictures from the IN$_3$ point to the last picture in GOP(o)(FIG. 17) constituting part of the bridge clip) are to be reproduced with reference to a point in time within the bridge clip.

The play list created by the play list creating unit 28 is output to the picture pointer creating unit 29 and write unit 31.

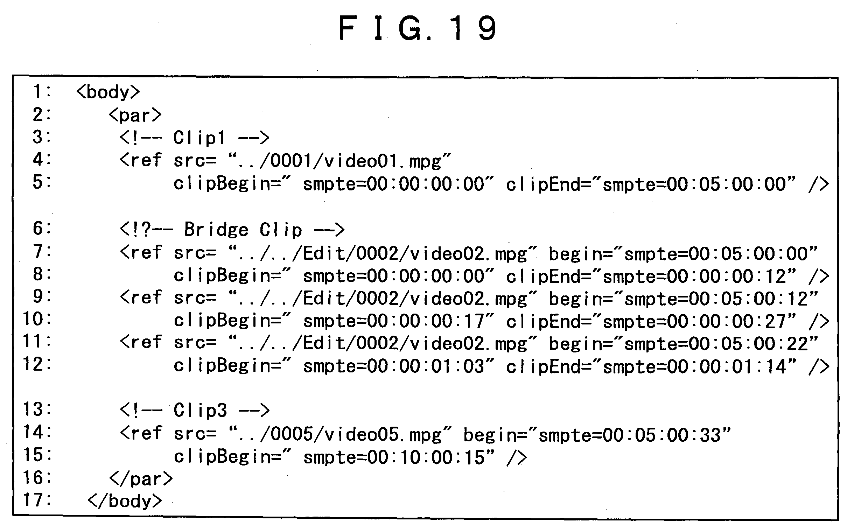

FIG. 19 is a schematic view of another typical play list created in step S10 of FIG. 13 on the basis of the edit list in FIG. 14. The play list of FIG. 19 differs from that of FIG. 18 in terms of how files are referenced.

More specifically, in the play list of FIG. 19, line 4 with ["../0001/video01.mpg"] designates the clip #1. Lines 7, 9, and 11 with ["../../Edit/0002/video02.mpg"] designate the bridge clip. Line 13 with ["../0005/video05.mpg"] designates the clip #3. As described, the play list creating unit 28 is capable of describing play lists so that clips may be designated in diverse formats.

Returning to the explanation of FIG. 13, the play list creating unit 28 checks in step S11 to see whether it is necessary to supplement the play list created in step S10 with additional information created by the additional information creating unit 27. If it is deemed necessary to furnish additional information, step S12 is reached. In step S12, the play list creating unit 28 supplements the play list with the additional information created by the additional information creating unit 27. The addition information illustratively includes schedule information and decode designation information, as will be discussed later.

If it is not deemed necessary to furnish additional information in step S11, step S12 is skipped.

In step S13, the picture pointer creating unit 29 creates the picture pointers for the clips to be referenced in the play list. For example, the picture pointer creating unit 29 supplements the picture pointers created in step S9 for the bridge clips with the picture pointers for those clips other than the bridge clips, which are also referenced in the play list. The picture pointers thus acquired make up the picture pointers of the play list. The picture pointers having been created as described by the picture pointer creating unit 29 are output to the write unit 31.

In step S14, the write unit 31 writes the play list coming from the play list creating unit 28 as well as the picture pointers from the picture pointer creating unit 29 to suitable areas on the optical disc 52 through the disc interface 51. After the write operation, the play list creating process is terminated.

If it is deemed unnecessary to create bridge clips in step S5 of FIG. 12, then step S15 is reached. In step S15, the unmodified edit list is regarded as a play list. Step S15 is followed by step S11 and subsequent steps. In other words, if the reproducing apparatus 101 can reproduce AV data in real time by referring to the edit list, then bridge clips are not created. In that case, the play list is created in such a manner that the clips referenced in the unmodified edit list become the objects to be reproduced.

When the reproducing apparatus 101 is supplied with a play list created to ensure real-time reproduction of AV data, the apparatus 101 reproduces the AV data in real time in keeping with the created play list. This prevents any freeze during reproduction stemming from an inordinately long seek time that would arise without recourse to such a play list.

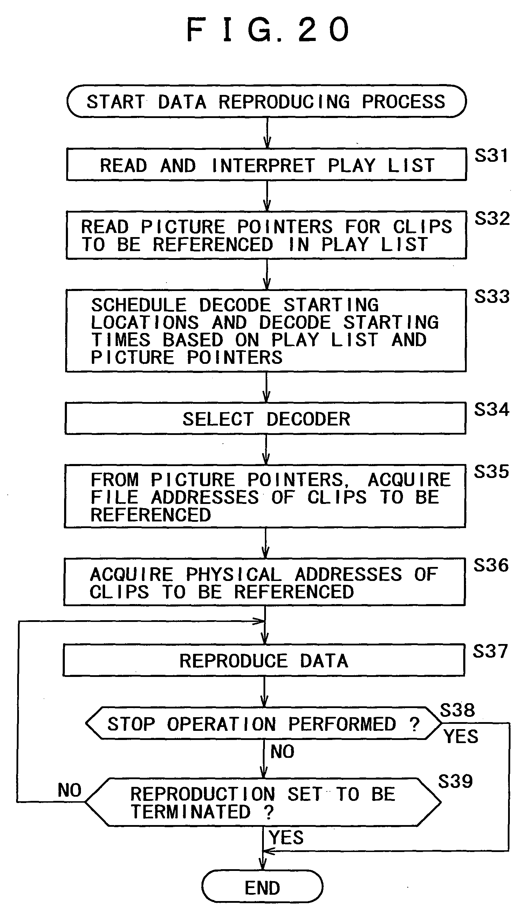

Described below with reference to the flowchart of FIG. 20 is an AV data reproducing process performed by the reproducing apparatus 101 in accordance with the play list created through the processing outlined in FIGS. 12 and 13.

The optical disc 52 with a play list recorded thereon is first loaded into the drive 112. When an instruction is given to reproduce AV data in keeping with the play list, the play list reading unit 132 reaches step S31, reads the play list from the optical disc 52, and interprets the retrieved list illustratively for conversion to an internally processible format. The play list retrieved and interpreted by the play list reading unit 132 is output to the picture pointer reading unit 131.

For example, the play list reading unit 132 reads from the disc the play list shown in FIG. 18 or the play list in FIG. 19.

In step S32, the picture pointer reading unit 131 reads from the optical disc 52 the picture pointers for the clips to be referenced in the play list. The picture pointers thus read by the picture pointer reading unit 131 are output to the decode scheduling unit 123 along with the play list.

In step S33, the decode scheduling unit 123 schedules decode starting locations and decode starting times for the AV data based on the play list and picture pointers coming from the picture pointer reading unit 131.

More specifically, the decode scheduling unit 123 detects from the play list the pictures for which edit points (IN points) are set, and acquires the picture types of the detected pictures from the picture pointers. As discussed earlier with reference to FIGS. 8 through 9C, the decode scheduling unit 123 acquires the number of pictures to be decoded preparatory to decoding each picture for which an edit point is set, and determines a decode starting location (for the picture in question) and a decode starting time accordingly.

In step S34, the decode scheduling unit 123 causes the decoder selecting unit 133 to select the decoder that will carry out the decoding.

In step S35, the decode scheduling unit 123 acquires from the picture pointers the file addresses of the clips to be referenced in the play list. In step S36, the decode scheduling unit 123 acquires the physical addresses of the pictures corresponding to the file addresses by querying the address managing unit 122.

It is the decoder controlling unit 124 that is supplied with such information as schedule information derived from the scheduling performed by the decode scheduling unit 123, decoder designation information, and physical addresses of the clips to be referenced.

The reproducing apparatus 101 of FIG. 6 performs preprocessing for AV data reproduction in three major stages: scheduling of decode starting locations and decode starting times (step S33), selection of the decoder (step S34), and acquisition of physical addresses (step S36) .

In step S37, the decoder controlling unit 124 reproduces the AV data by controlling the decoders $155_1$ and $155_2$ in keeping with the schedule information and decoder designation information.

In step S38, the decoder controlling unit 124 determines whether the user has effected a stop operation. If the stop operation is not found to be carried out, step S39 is reached. In step S39, the decoder controlling unit 124 determines whether reproduction of the AV data is set to be terminated according to the play list.

If in step S39 the decoder controlling unit 124 determines that reproduction of the AV data is not set to be terminated, the controlling unit 124 goes back to step S37 and repeats the subsequent steps. If reproduction of the AV data is found set to be terminated, then the data reproduction is brought to an end. The reproduction is also terminated if the stop operation is found to be performed in step S38.

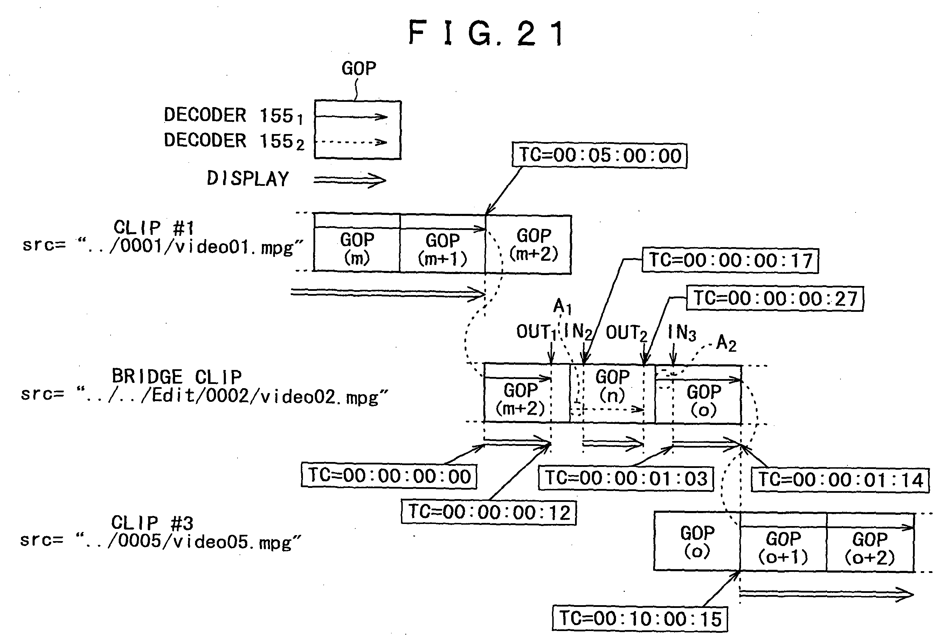

FIG. 21 schematically shows how AV data are reproduced in step S37 of FIG. 20 when the play list of FIG. 19 is provided. In FIG. 21, the order of display is indicated by hollow arrows; the order of decoding (i.e., reproduction) by the decoder $155_1$ is represented by solid-line arrows across AV data (GOP's); and the order of decoding by the decoder $155_2$ is denoted by broken-line arrows across the AV data.

Illustratively, according to the description of lines 4 and 5 in FIG. 19, the decoder $155_1$ selected in the above-described process (step S34) decodes pictures ranging from [TC=00:00:00:00] to [TC=00:05:00:00] in a clip #1 designated by ["../0001/video01.mpg"](i.e., the first picture of $GOP_i$ through the last picture of GOP(m+1)), as shown in FIG. 21.

Following the last picture of GOP(m+1) (at TC=00:05:00:00) and based on the description of lines 7 and 8 in FIG. 19, the decoder $155_1$ decodes pictures ranging from [TC=00:00:00:00] to [TC=00:00:00:12] in a bridge clip designated by ["../../Edit/0002/video02.mpg"](i.e., the first picture through the picture for which an $OUT_1$ point is set in GOP(m+2)).

If the reproduction starting time [TC=00:00:00:00] for the clip #1 is taken as the reference, the $OUT_1$ point is defined as [TC=00:05:00:00] at which decoding of the last picture of GOP(m+1) is to end, plus a period of time [00:00:00:12] ranging from the beginning of GOP(m+2) to the $OUT_1$ point in the bridge clip. That is, the $OUT_1$ point is located at [TC=00:05:00:12].

Following the decoding of the picture for which the $OUT_1$ point is set [at TC=00:05:00:12] and based on the description of lines 9 and 10 in FIG. 19, the decoder $155_2$ illustratively decodes pictures ranging from [TC=00:00:00:17] to [TC=00:00:00:27](i.e., the picture for which the $IN_2$ point is set, through the picture for which the $OUT_2$ point is set in GOP(n)).

A range $A_1$ in FIG. 21 indicates that the pictures within that range (i.e., undisplayed pictures located prior to the picture for which the $IN_2$ point is set) are decoded by the decoder $155_2$. As mentioned above, to implement real-time reproduction here requires that the undisplayed pictures be decoded by the decoder $155_2$ preparatory to decoding the picture for which the $IN_2$ point is established.

If the reproduction starting time for the clip #1 is taken as the reference, the $OUT_2$ point is defined as [TC=00:05:00:12] at which the $OUT_1$ point is set, plus a period of time [00:00:00:10] ranging from the $IN_2$ point to the $OUT_2$ point of GOP(n) in the bridge clip. That is, the $OUT_2$ point is located at [TC=00:05:00:22].

Following the decoding of the picture for which the $OUT_2$ point is set [at TC=00:05:00:22] and based on the description of lines 11 and 12 in FIG. 19, the decoder $155_1$ illustratively decodes pictures ranging from [TC=00:00:01:03] to (TC=00:00:01:14](i.e., the picture of GOP(o) for which the $IN_3$ point is set through the last picture of GOP(o)).

A range $A_2$ in FIG. 21 indicates that the pictures within that range (i.e., undisplayed pictures located prior to the picture for which the $IN_3$ point is set) are decoded by the decoder $155_1$ preparatory to decoding the picture for which the $IN_3$ point is established.

If the reproduction starting time for the clip #1 is taken as the reference, the last picture of GOP(o) is defined as [TC=00:05:00:22] at which the $OUT_2$ point is set, plus a period of time [00:00:00:11] ranging from the $IN_3$ point to the $OUT_3$ point of GOP(n) in the bridge clip. That is, the last picture of GOP(o) is located at [TC=00:05:00:33].

Following the decoding of the bridge clip [at TC=00:05:00:33] and based on the description of lines 14 and 15 in FIG. 19, the decoder $155_1$ illustratively decodes pictures ranging from [TC=00:10:00:00] of the clip #3 (i.e., from the first picture of GOP(o+1)) to a predetermined subsequent picture.

The decoding process is carried out in the manner described above and the decoded pictures are displayed on the display unit 157. The switcher 156 suitably switches the decoder output to the display unit 157 in synchronism with the decoders being switched.

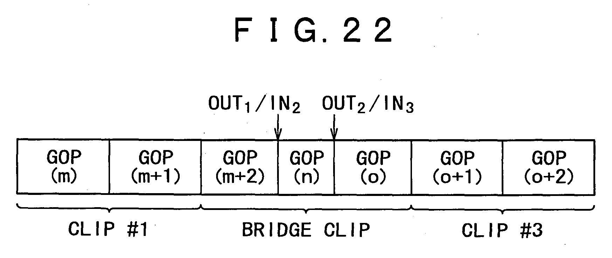

FIG. 22 schematically shows how the display unit 157 provides its display. As shown in FIG. 22, real-time picture reproduction is guaranteed when decoding is performed based on the play list of FIG. 19 or when decoding is started at a suitable point in time preparatory to displaying each picture for which an edit point is set.

As depicted in FIG. 22, the pictures, which are the objects of reproduction in the clip #1, clip #3, and bridge clip and which resulted from a non-destructive editing process (i.e., the pictures within the range indicated by hollow arrows in FIG. 16) are then displayed without interruption.

Through the use of the disc apparatus 1 and reproducing apparatus 101 working as described above, the user as an editor is able to proceed with editing without having to be aware of whether or not the edited AV data will be eventually reproduced in real time.

Decoding or re-encoding is not carried out during the creation of any bridge clips. This makes it possible to prevent degradation in the quality of pictures displayed in reference to the bridge clips.

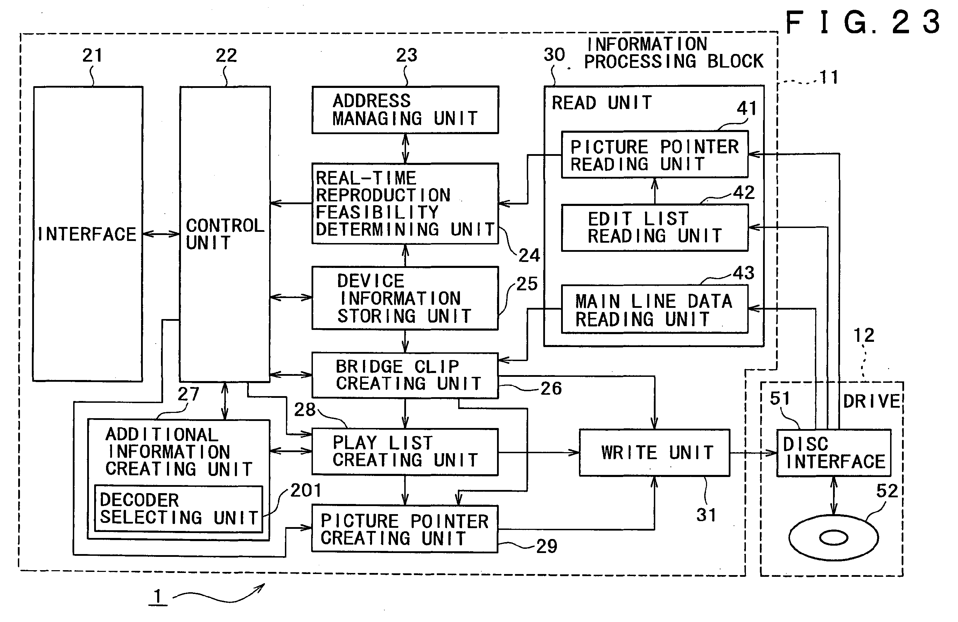

FIG. 23 is a block diagram sketching another typical structure of the disc apparatus 1. Of the reference numerals in FIG. 23, those already used in FIG. 2 designate like or corresponding parts, and the descriptions of these parts will not be repeated where redundant. Unlike the disc apparatus 1 of FIG. 2, the disc apparatus 1 of FIG. 23 has a decoder selecting unit 201 in the additional information creating unit 27.

The decoder selecting unit 201 receives information about bridge clips from the bridge clip creating unit 26 via the control unit 22, picture pointers from the control unit 22, and device information such as the number of decoders furnished in the reproducing apparatus 101 from the control unit 22. In accordance with the received information, the decoder selecting unit 201 creates decoder designation information as additional information and supplies the created information to the play list creating unit 28.

In the earlier example, the reproducing apparatus 101 was shown selecting by itself the decoder to be used preparatory to reproducing AV data (in step S34 of FIG. 20). In this example, the disc apparatus 1 selects the decoder prior to decoding and has decoder designation information included in the play list. This allows the reproducing apparatus 101 rapidly to start its reproducing process without having to select the decoder preparatory to reproducing AV data.

When a bridge clip is created, the GOP's making up that bridge clip should preferably be decoded by the same decoder as that which had been set to decode these GOP's before they were relocated into the bridge clip.

For example, GOP(m+2) as part of the bridge clip shown in FIG. 21 should preferably be decoded by the decoder $155_1$ that had been set to decode the clip #1 before GOP(m+2) was relocated to become part of the bridge clip. That is because the last picture of GOP (m+1) and the first picture of GOP(m+2), intended originally to constitute a continuous image sequence, could lose their continuity if different decoders were selected to reproduce the pictures one after another.

To avert such a snag, the disc apparatus 1 designed to create bridge clips creates a play list containing decoder designation information. The play list is to be used as the basis for decoding AV data (bridge clips) to prevent eventual degradation in picture quality.

Given the decoder designation information from the decoder selecting unit 201, the play list creating unit 28 creates the play list including codes for designating the decoders. The play list thus created is recorded to the optical disc 52 and offered to the reproducing apparatus 101.

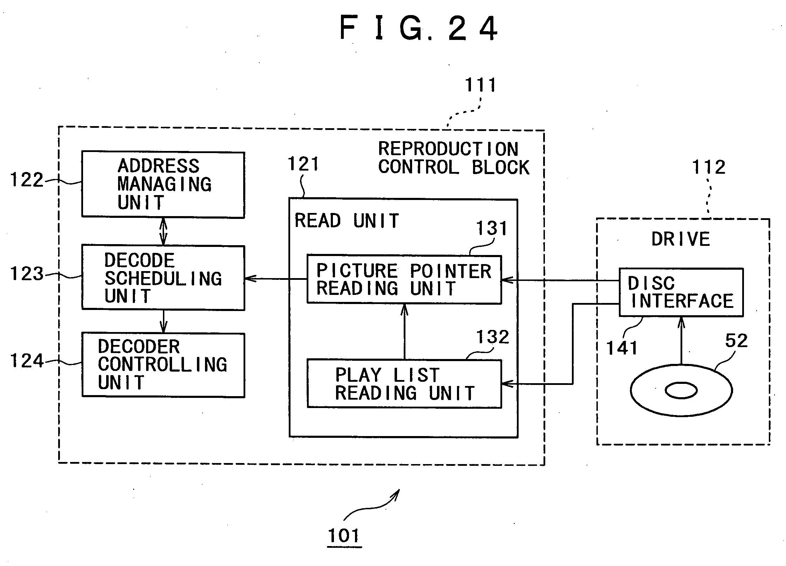

FIG. 24 is a block diagram giving another typical structure of the reproducing apparatus 101. The reproducing apparatus 101 of FIG. 24 reproduces AV data in keeping with the play list created by the disc apparatus 1 of FIG. 23.

Since the play list created by the disc apparatus 1 of FIG. 23 includes the decoder designation information, there is no need for the reproducing apparatus 101 to select decoders while reproducing AV data. Thus unlike the reproducing apparatus 101 of FIG. 6, the reproducing apparatus 101 of FIG. 24 does not include the decoder selecting unit 133 in the decode scheduling unit 123.

The rest of the structure and the workings of the reproducing apparatus 101 in FIG. 24 are the same as those of its counterpart in FIG. 6. That is, based on the play list and picture pointers supplied from the picture pointer reading unit 131, the decode scheduling unit 123 performs decode scheduling and outputs the results of the scheduling to the decoder controlling unit 124. The structure and the workings common to the two reproducing apparatuses will not be discussed further.

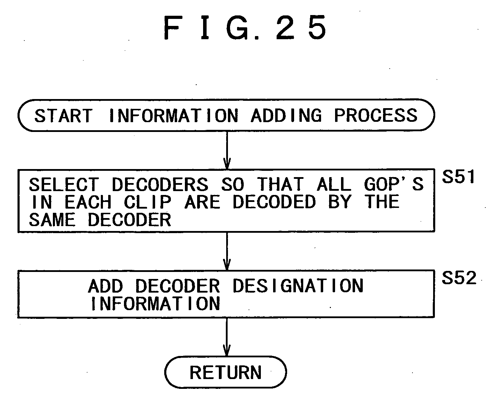

Described below with reference to the flowchart of FIG. 25 is a typical process performed by the disc apparatus 1 of FIG. 23 to additionally furnish decoder designation information. This process is carried out in step S12 during the play list creating process discussed above with reference to FIGS. 12 and 13. Specifically, the process is effected if it is found necessary in step S11 to provide additional information to the play list.

When the play list creating unit 28 gives an instruction that additional information is to be needed, step S51 of FIG. 25 is reached. In step S51, the decoder selecting unit 201 selects decoders so that all GOP's making up each clip will be decoded by the same decoder. Decoder designation information resulting from the decoder selecting process is output to the play list creating unit 28.

In step S52, the play list creating unit 28 receives the decoder designation information from the decoder selecting unit 201 and adds the received information to the play list created in step S10 of FIG. 12.

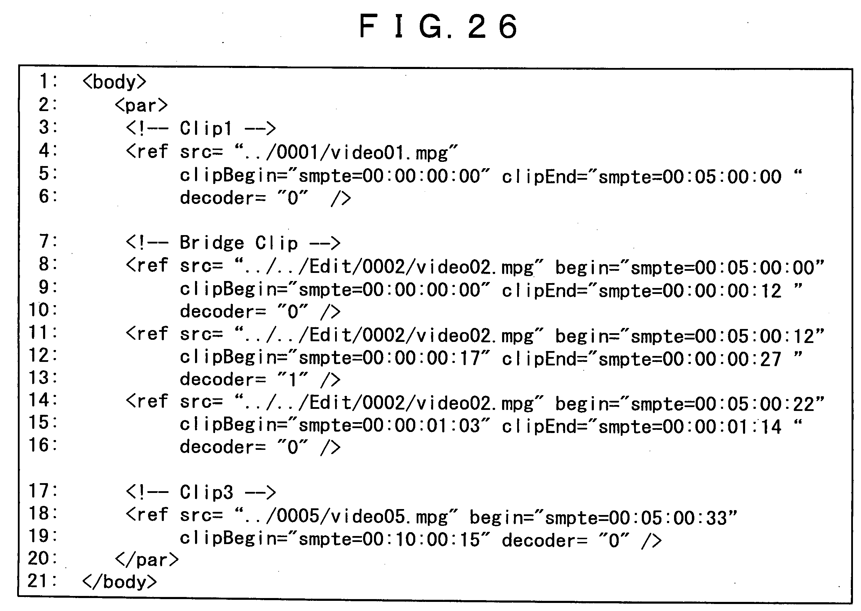

FIG. 26 is a schematic view of a typical play list created in the process of FIG. 25. The play list of FIG. 26 is the same as that of FIG. 19 except that lines 6, 10, 13, 16, and 19 have additional descriptions for designating decoders.

In FIG. 26, it is assumed that the decoder-designating description [decoder="0"/] specifies that a clip #1 to which the description corresponds is to be decoded by the decoder $155_1$, one of the two decoders in the reproducing apparatus 101. Likewise the decoder-designating description (decoder="1"/] is assumed to specify that the corresponding clip is to be decoded by the decoder $155_2$.

In FIG. 26, line 6 with [decoder="0"/] specifies that the decoder $155_1$ is to decode pictures in the clip #1 between [TC=00:00:00:00] and [TC=00:05:00:00] as designated by codes on lines 4 and 5.

Line 10 with [decoder="0"/] specifies that the decoder $155_1$ is to decode pictures in a bridge clip between [TC=00:00:00:00] and [TC=00:00:00:12] as designated by codes on lines 8 and 9.

Line 13 with [decoder="1"/] specifies that the decoder $155_2$ is to decode pictures in the bridge clip between [TC=00:00:00:17] and [TC=00:00:00:27] as designated by codes on lines 11 and 12.

Lines 16 with [decoder="0"/] specifies that the decoder $155_1$ is to decode pictures in the bridge clip between [TC=00:00:01:03] and [TC=00:00:01:14] as designated by codes on lines 14 and 15.

Line 19 with [decoder="0"/] specifies that the decoder $155_1$ is to decode pictures subsequent to [TC=00:10:00:15] in a clip #3 as designated by codes on lines 18 and 19.

In the manner described above, the decoder designation information (i.e., descriptions) is included in the play list and provided to the reproducing apparatus 101 of FIG. 24.

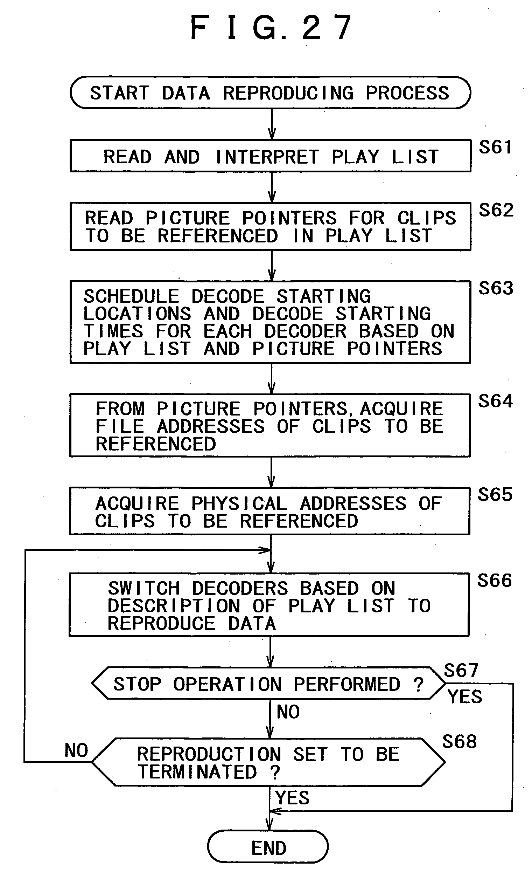

Described below with reference to the flowchart of FIG. 27 is a reproducing process performed by the reproducing apparatus 101 of FIG. 24 in accordance with a play list supplemented with additional information for designating decoders.

The process shown in FIG. 27 is basically the same as that in FIG. 20 except that a decoder-selecting step (i.e., step S34 in FIG. 20) is not included. In step S66 of FIG. 27, the decoder controlling unit 124 switches decoders based on the descriptions in the play list to reproduce (i.e., decode) AV data. The other steps in FIG. 27 are the same as those in FIG. 20 and thus will not be discussed further.

If an optical disc 52 with the play list of FIG. 26 recorded thereon is loaded, AV data recorded on the disc together with the play list are decoded by the reproducing apparatus 101 of FIG. 24 switching the decoders as depicted in FIG. 21.

As described, where the decoder designation information is included in the play list, the preprocessing involving selection of decoders performed in the process of FIG. 20 will not be carried out by the reproducing apparatus 101 of FIG. 24. This makes it possible for the reproducing apparatus 101 to start reproducing AV data more quickly than before.

The feature above also makes it possible to ensure real-time reproduction of AV data by the reproducing apparatus 101. Furthermore, picture quality is improved because the decoders are switched in a manner giving priority to the continuity of pictures.

In the foregoing explanation, the description [decoder="0"/] or [decoder="1"/] in the play list was shown designating the decoder to be used. Alternatively, where the reproducing apparatus 101 incorporates more decoders (i.e., three or more decoders), the decoders may be designated using descriptions with two or more bits in a format such as [decoder="00"/], [decoder="01"/], etc.

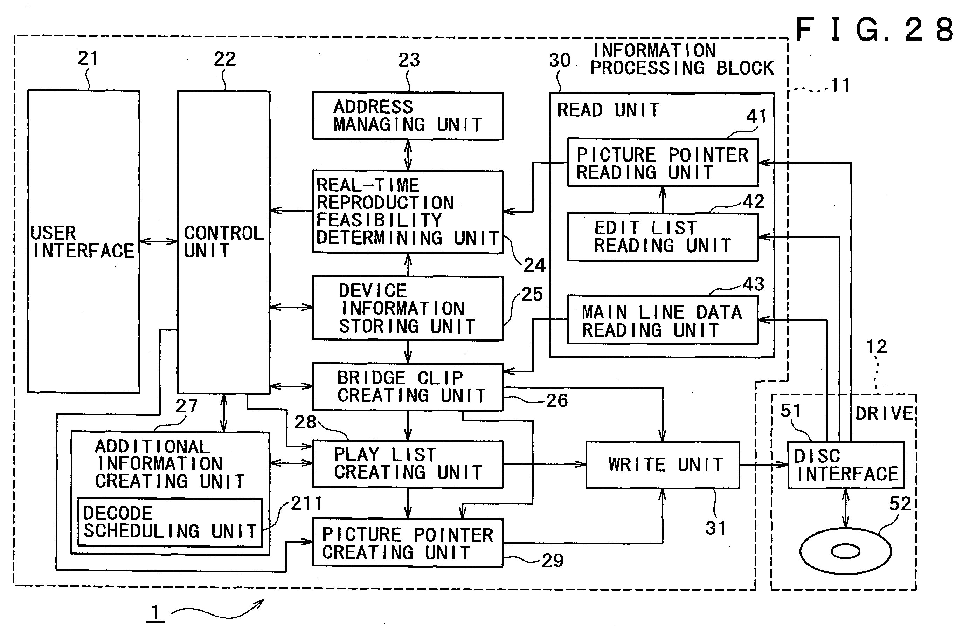

FIG. 28 is a block diagram showing another typical structure of the disc apparatus 1. Of the reference numerals in FIG. 28, those already used in FIG. 2 designate like or corresponding parts, and the descriptions of these parts will not be repeated where redundant. Unlike the disc apparatus 1 of FIG. 2, the disc apparatus 1 of FIG. 28 has a decode scheduling unit 211 included in the additional information creating unit 27.

The decode scheduling unit 211 creates the above-described schedule information such as decode starting times and decode starting locations as additional information, and supplies the created information to the play list creating unit 28. The reproducing apparatus 101 of FIG. 6 was shown performing decode scheduling and selecting the decoder preparatory to reproducing AV data (in steps S33 and S34 of FIG. 20). The disc apparatus 1 of FIG. 28, by contrast, carries out by itself decode scheduling and has the schedule information included in the play list.

The feature above frees the reproducing apparatus 101 of the need to effect decode scheduling before AV data reproduction, and allows the apparatus 101 to start reproducing the data quickly. Furthermore, the feature guarantees real-time reproduction of AV data.

The decode scheduling unit 211 carries out decode scheduling based on the edit list, bridge clip-related information, and picture pointers supplied from the control unit 22, as well as on device information such as the number of decoders furnished in the reproducing apparatus 101.

As discussed above with reference to FIGS. 8 through 9C, the decode scheduling unit 211 detects pictures for which edit points are set from the edit list supplied from the control unit 22, and acquires picture types of the detected pictures from the corresponding picture pointers. With regard to each picture for which an edit points is set, the decode scheduling unit 211 detects the number of pictures required to be decoded preparatory to decoding that picture with the edit point, thereby determining a decode starting location and a decode starting time for the picture in question.

The schedule information resulting from the scheduling process performed by the decode scheduling unit 211 is output to the play list creating unit 28.

In accordance with the schedule information received, the play list creating unit 28 causes information for designating decode starting times (i.e., decoder switching times) to be included in a play list in the form of attribute information named illustratively [preDecBegin]. Where necessary, the number of I and P pictures to be decoded preparatory to decoding a given picture for which an edit point is set is also included in the play list in the form of attribute information named illustratively [preDecDur]. The play list containing these attributes is recorded to the optical disc 52 and provided to the reproducing apparatus 101.

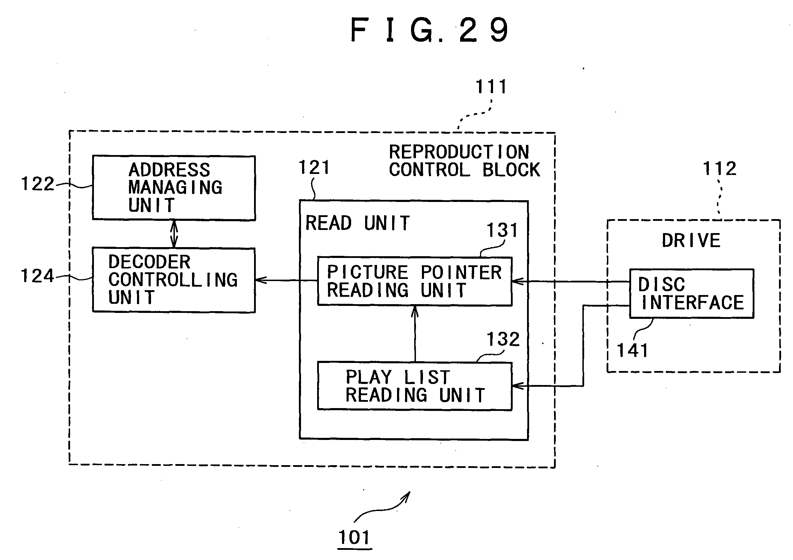

FIG. 29 is a block diagram depicting another typical structure of the reproducing apparatus 101. The reproducing apparatus of FIG. 29 reproduces AV data in keeping with the play list created by the disc apparatus 1 of FIG. 28.

The play list prepared by the disc apparatus 1 of FIG. 28 includes the attribute information for designating decode starting times (i.e., decoder switching times). For that reason, there is no need for the reproducing apparatus 101 to perform decode scheduling preparatory to reproducing AV data. Thus unlike the reproducing apparatus 101 of FIG. 6, the reproducing apparatus 101 of FIG. 29 does not have the decode scheduling unit 123 or the decoder selecting unit 133 that would have been contained in the unit 123.

The rest of the structure and the workings of the reproducing apparatus 101 in FIG. 29 are the same as those of its counterpart in FIG. 6. That is, based on the play list and picture pointers supplied from the picture pointer reading unit 131, the decoder controlling unit 124 controls the decoders while decoding AV data. Illustratively, the decoder controlling unit 124 detects attribute information that designates decode starting times (i.e., decoder switching times) from the play list and, when any one of the designated times is reached, switches the decoders to decode AV data. The structure and the workings common to the two reproducing apparatuses will not be discussed further.

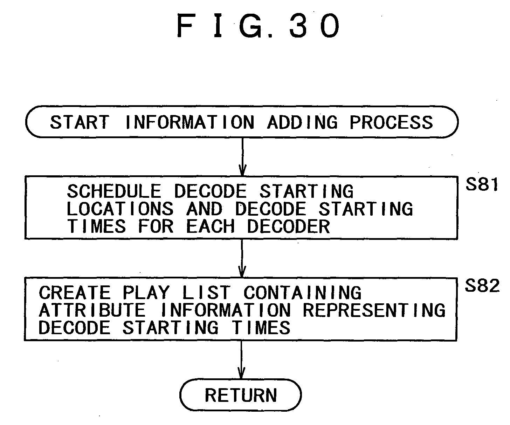

Described below with reference to the flowchart of FIG. 30 is a typical process performed by the disc apparatus 1 of FIG. 28 to additionally furnish attribute information (i.e., information for designating decode starting times). As with the process of FIG. 25, the process of FIG. 30 is carried out when it is found necessary in step S11 of FIG. 13 to provide additional information for creating the play list.

When the play list creating unit 28 gives an instruction that additional information is to be needed, step S81 of FIG. 30 is reached. In step S81, the decode scheduling unit 211 schedules the decode starting times and decode starting locations regarding each of the decoders. That is, the scheduling discussed above with reference to FIGS. 8 through 9C is carried out. The schedule information resulting from the decode scheduling process above is output to the play list creating unit 28.

In step S82, based on the schedule information supplied from the decode scheduling unit 211, the play list creating unit 28 supplements the play list created in step S10 of FIG. 12 with the preDecBegin attribute information designating decode starting times. This is how the play list containing the additional attribute information is typically created.

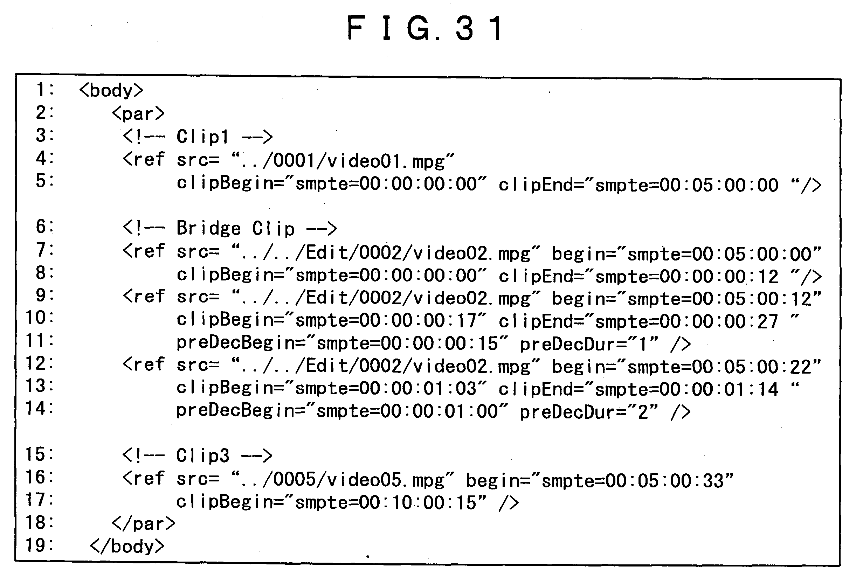

FIG. 31 is a schematic view of a typical play list supplemented with the attribute information for designating decode starting times. The play list of FIG. 31 also includes preDecDur attribute information denoting the number of I and P pictures to be decoded preparatory to decoding each picture for which an edit point is set. The preDecDur attribute values (i.e., picture counts) are obtained illustratively from the table of FIG. 8.

The play list shown in FIG. 31 is basically the same as the play list in FIG. 26, except that lines 11 and 14 are furnished with preDecBegin attribute and preDecDur attribute information each and that decoder designation information is not included.

The portion [preDecBegin="00:00:00:15"] on line 11 specifies that decoding of a bridge clip designated by codes on lines 9 and 10 be started at [TC=00:00:00:15]. The portion [preDecDur="1"/] also on line 11 indicates that the number of I and P pictures to be decoded preparatory to decoding the picture that should be displayed at [TC=00:00:00:17] is one.

Based on the attribute information above, the reproducing apparatus 101 starts decoding data at [TC=00:00:00:15]. This allows the reproducing apparatus 101 to provide real-time reproduction of the bridge clip picture that is to be displayed at [TC=00:00:00:17].

The decoding starting at [TC=00:00:00:15] designated by the preDecBegin attribute information is performed by a decoder different from the decoder that decoded the bridge clip specified by codes on lines 7 and 8. As described above, the decoders are switched at a point in time designated by the preDecBegin attribute information.

Likewise, the portion [preDecBegin="00:00:01:00"] on line 14 specifies that decoding of the bridge clip designated by codes on lines 12 and 13 be started at [TC=00:00:01:00]. The portion [preDecDur="2"/] also on line 14 indicates that the number of I and P pictures to be decoded preparatory to decoding the picture that should be displayed at [TC=00:00:01:03] is two.

The reproducing apparatus 101 thus starts decoding data at [TC=00:00:01:00] based on the attribute information above. This allows the reproducing apparatus 101 to provide real-time reproduction of the bridge clip picture that is to be displayed at [TC=00:00:01:03].

The decoding starting at [TC=00:00:01:00] designated by the preDecBegin attribute information is performed by a decoder different from the decoder that decoded the bridge clip specified by codes on lines 9 and 10.

In the manner described above, the information for designating decode starting times is included beforehand in the play list by the disc apparatus 1 and provided to the reproducing apparatus 101 of FIG. 29.

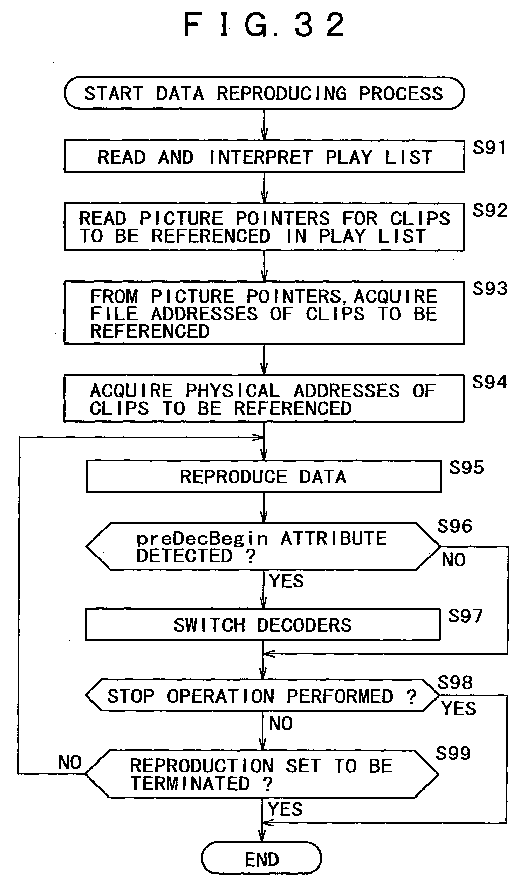

Described below with reference to the flowchart of FIG. 32 is a reproducing process performed by the reproducing apparatus 101 of FIG. 29 in accordance with a play list supplemented with additional information for designating decode starting times. The process shown in FIG. 32 is basically the same as that in FIG. 20 or 27 except that decode scheduling (corresponding to step S33 in FIG. 20 or to step S63 in FIG. 27) is not carried out.

Referring to FIG. 32, reproduction (i.e., decoding) is started in step S95. In step S96, the decoder controlling unit 124 determines whether preDecBegin attribute information is detected from the code in the play list, which is currently referenced.

If in step S96 no preDecBegin attribute information is found to be detected, step S98 is reached. Step S98 and the subsequent steps are carried out in the same manner as in the process discussed above with reference to FIG. 20.

If in step S96 any preDecBegin attribute information is found to have been detected from the currently-referenced play list code, then step S97 is reached. In step S97, the decoder controlling unit 124 switches the decoders at a point in time designated by the pre-DecBegin attribute information. The remaining steps of FIG. 32 are the same as those in the preceding description and thus will not be discussed further.

As described, where the information that denotes decode starting times is included in the play list, the reproducing apparatus 101 does not perform decode scheduling preparatory to AV data reproduction. Also, the reproducing apparatus 101 does not perform decoder selection because the decoders are set to be switched at each point in time designated by preDecBegin attribute information.

Where the above-described process is implemented, the reproducing apparatus 101 of FIG. 29, given the play list of FIG. 31, causes the decoders $155_1$ and $155_2$ to execute the decoding steps discussed earlier with reference to FIG. 21.

That is, the decode starting time for the range $A_1$ in FIG. 21 (i.e., time to start decoding the necessary range of pictures preparatory to decoding the picture for which the $IN_2$ point is set) is [TC=00:00:00:15] designated by the preDecBegin attribute information on line 11 in FIG. 31. Likewise the decode starting time for the range $A_2$ in FIG. 21 (i.e., time to start decoding the necessary range of pictures preparatory to decoding the picture for which the $IN_3$ point is set) is [TC=00:00:01:00] designated by the preDecBegin attribute information on line 14 in FIG. 31.

As shown in FIG. 21, the decoding starting at [TC=00:00:00:15] designated by the preDecBegin attribute information on line 11 in FIG. 31 involves having the decoder $155_2$ replace the decoder $155_1$ that decoded pictures up to that point (i.e., $OUT_1$ point). Similarly the decoding starting at [TC=00:00:01:00] designated by the preDecBegin attribute information on line 14 in FIG. 31 involves having the decoder $155_1$ replace the decoder $155_2$ that decoded pictures up to that point (i. e., $OUT_2$ point) .

In this manner, the reproducing apparatus 101 has no need to perform decode scheduling or decoder selection prior to AV data reproduction; the apparatus can start reproducing the AV data immediately, without preliminary steps. Furthermore, the reproducing apparatus 101 working as described guarantees real-time AV data reproduction.

The reproducing apparatus 101 need only switch decoders each time a point in time designated by preDecBegin attribute information is reached. This feature makes it possible easily to deal with changes in the hardware configuration such as more decoders getting added after the creation of a play list by the disc apparatus 1.

For example, suppose that the number of decoders in the reproducing apparatus 101 is raised after the play list shown in FIG. 26 has been created wherein decoders are designated directly by the disc apparatus 1. In that case, the reproducing apparatus 101 is incapable of associating the actual decoders installed therein with the decoders designated in the play list and is thus barred from reproducing AV data in keeping with the play list.

With the inventive arrangements in place, AV data can be reproduced based on a play list by equipment (i.e., reproducing apparatus) that has a different number of decoders from that which was envisaged during creation of that play list. The disc apparatus 1 can thus create general-purpose play lists that may be utilized by diverse kinds of equipment.

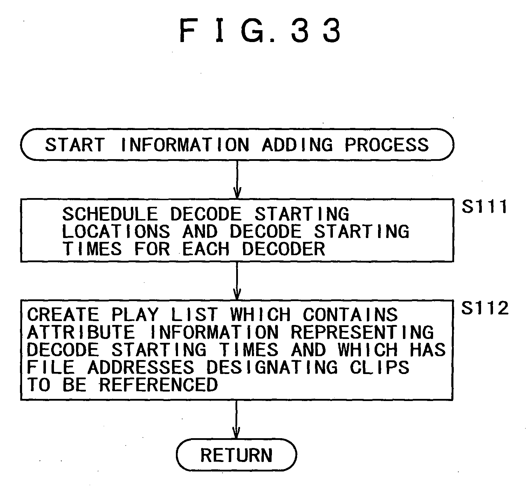

Described below with reference to the flowchart of FIG. 33 is another information adding process performed by the disc apparatus 1 of FIG. 28. Unlike the process in FIG. 30, the process in FIG. 33 involves creating in step S112 a play list wherein not only preDecBegin attribute information for designating decode starting times is included but also the clips to be referenced are designated by file addresses. Step S111 in FIG. 33 is functionally the same as step S81 in FIG. 30.

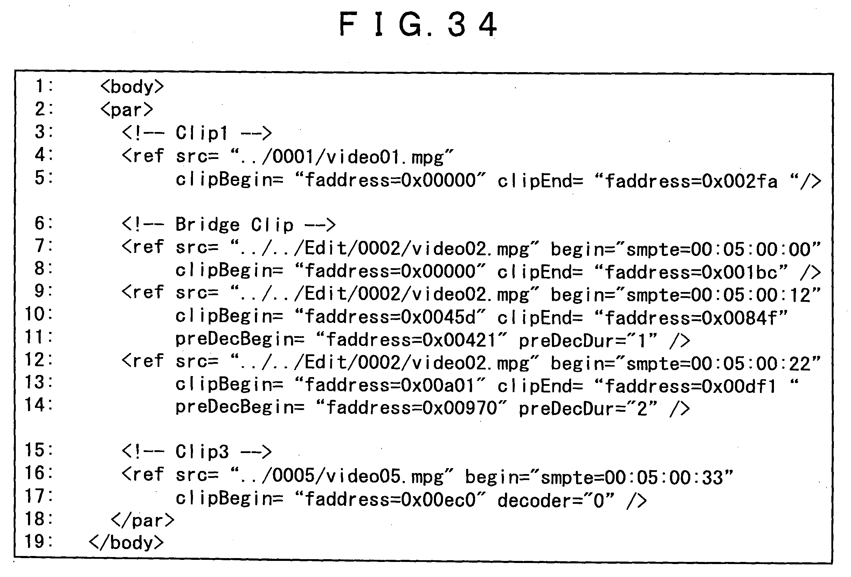

FIG. 34 schematically shows a typical play list created in the steps of FIG. 33. This play list is basically the same as that in FIG. 31.

On line 5 in the play list of FIG. 34, the clip to be referenced is designated not by a time code as in the play list of FIG. 31 but by a file address (logical address), i.e., (clipBegin="faddress=0x00000" clipEnd="faddress=0x002fa"]. This file address is acquired by the play list creating unit 28 of FIG. 28 from the picture pointers supplied by the control unit 22.

Likewise, the clips to be referenced are designated by [clipBegin="faddress=0x00000" clipEnd="faddress=0x001bc"] on line 8, by [clipBegin="faddress==0x0045d" clipEnd="faddress=0x0084f"] on line 10, by [preDecBegin="faddress=0x00421"] on line 11, by [clipBegin="faddress=0x00a01" clipEnd="faddress=0x00df1"] on line 13, by [preDecBegin="faddress=0x00970"] on line 14, and by [clipBegin="faddress=0x00ec0"] on line 17.

Where the ranges to be referenced are designated by file addresses in the play list as described, the reproducing apparatus 101 of FIG. 29, after acquiring the play list, can skip the preparatory steps of obtaining the file addresses of the clips to be referenced from the picture pointers during reproduction. This feature also allows the reproducing apparatus 101 of FIG. 29 to start reproducing the data more quickly than before.

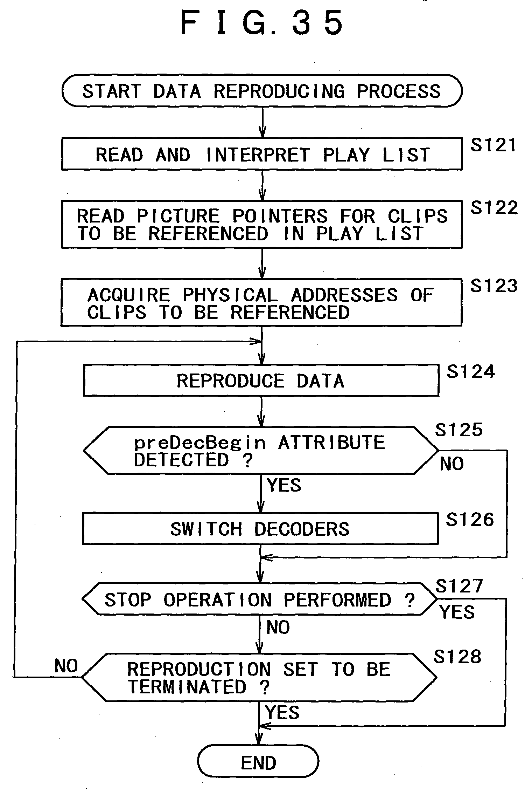

Described below with reference to the flowchart of FIG. 35 is a reproducing process performed by the reproducing apparatus 101 of FIG. 29 having acquired the play list of FIG. 34. Unlike the process in FIG. 32, the process in FIG. 35 skips the step of acquiring the file addresses of the clips to be referenced from the picture pointers (i.e., step S93 in FIG. 32). That is, the decoder controlling unit 124 of FIG. 29 acquires in step S123 the physical addresses of the clips to be referenced from the address managing unit 122 based on the file addresses described in the play list.

Having acquired the physical addresses of the clips to be referenced, the decoder controlling unit 124 proceeds with AV data reproduction using the same steps of FIG. 32 subsequent to the stage of physical address acquisition.

As a result, the reproducing apparatus 101 of FIG. 29 can start reproducing AV data more quickly than before without executing such preparatory steps as decode scheduling, decode selection, or file address acquisition. Reproduction of the AV data is guaranteed to be implemented in real time.

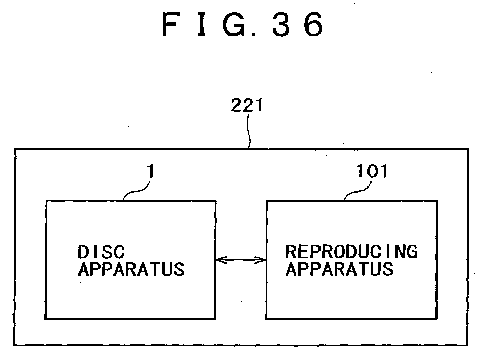

In the foregoing description, the disc apparatus 1 and reproducing apparatus 101 were shown being discrete devices. However, this is not a requirement of the invention. Alternatively, these apparatuses may be integrated to form a single entity such as an information processing apparatus 221 shown in FIG. 36.

Where the apparatus of FIG. 36 is in use, a play list created by a disc apparatus 1 included therein is output to an incorporated reproducing apparatus 101. In accordance with the play list received from the disc apparatus 1, the reproducing apparatus 101 reproduces AV data in real time.

In the foregoing explanation, the play list created by the disc apparatus 1 was assumed to be recorded onto the optical disc 52 and provided to the reproducing apparatus 101. However, this is not a requirement of the invention. Alternatively, the play list may be transmitted to the reproducing apparatus over a network together with AV data and picture pointers. As another alternative, the play list may be offered to the reproducing apparatus by means of the removable media 70 (FIG. 5) such as a memory card containing a flash memory, a removable hard disc drive, or an optical card.

The foregoing description has mainly dealt with cases where the reproducing apparatus 101 has two decoders. Obviously, the reproducing apparatus may alternatively incorporate one decoder, or three or more decoders.

It has been assumed above that one GOP is made up of the pictures B1, B2, I3, B4, B5, P6, B7, B8, P9, B10, B11, P12, B13, B14, and P15. Alternatively, embodiments of this invention may be applied to other GOP structures.

In the foregoing explanation, it has also been assumed that the AV data recorded on the optical disc 52 are the object of reproduction. Alternatively, embodiments of this invention may be applied to reproducing AV data recorded on other recording media such as magnetic discs, magnetic tapes, or semiconductor memories; or to reproducing AV data transmitted through such media as the Internet.

The series of steps described above may be executed either by hardware or by software. For the software-based processing to take place, the programs constituting the software may be installed in a general-purpose computer or like equipment.

For the software-based steps to be carried out, the programs constituting these steps may be either loaded from dedicated hardware of a computer into its internal memory for execution, or installed upon program execution over the network or from a suitable recording medium into a general-purpose personal computer or like equipment capable of executing diverse functions.

As shown in FIG. 5, the recording medium is offered to users apart from the apparatus not only as a package medium constituted by the optical disc 52 or removable media 70 containing the programs, but also in the form of the ROM 62 or the hard disc drive in the storage unit 68, each storage device containing the programs and incorporated beforehand in the apparatus.

In this specification, the steps, which are stored on the recording medium and which describe the programs to be executed by the apparatus, represent not only the processes that are carried out in the depicted sequence (i.e., on a time series basis) but also processes that may be performed parallelly or individually.

The programs may be processed either by a single computer or by a plurality of computers on a distributed basis. The programs may also be transferred to a remote computer or computers for execution.

To sum up, the arrangements according to embodiments of the invention ensure real-time reproduction of AV data. The inventive arrangements also make it possible to start reproducing the AV data more quickly than before.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information creating apparatus for creating information to be provided to a reproducing apparatus for reproducing data, said information creating apparatus comprising:

   first acquiring means for acquiring edit point information describing an edit point set for said data; and
   creating means for creating reproduction control information in accordance with said edit point information acquired by said first acquiring means, said reproduction control information resulting from an editing process based on said edit point and serving to control reproduction of said data.

2. The information creating apparatus according to claim 1, wherein said reproducing apparatus further comprises:

determining means for determining whether it is possible for said reproducing apparatus to reproduce in real time said data resulting from said editing process; and
relocating means for relocating data in proximity of said edit point if said determining means determines that it is impossible for said reproducing apparatus to reproduce in real time said data resulting from said editing process; and

wherein said creating means creates said reproduction control information including information for indicating said data relocated by said relocating means as a reproduction object.

3. The information creating apparatus according to claim 1, wherein said creating means creates said reproduction control information including information for designating a decoder of said reproducing apparatus for use in reproducing said data.

4. The information creating apparatus according to claim 1, further comprising determining means for determining a location at which said reproducing apparatus starts reproducing said data;
wherein said creating means creates said reproduction control information including information for designating the starting location determined by said determining means.

5. The information creating apparatus according to claim 4, wherein said creating means creates said reproduction control information including information for designating said starting location determined by said determining means using address information processible by said reproducing apparatus.

6. The information creating apparatus according to claim 1, further comprising second acquiring means which, if said data are constituted by pictures, then acquires picture information about said pictures;
wherein said creating means creates said reproduction control information in accordance with said picture information acquired by said second acquiring means.

7. An information creating method for creating information to be provided to a reproducing apparatus for reproducing data, said information creating method comprising the steps of:

acquiring edit point information describing an edit point set for said data; and
creating reproduction control information in accordance with said edit point information acquired in said acquiring step, said reproduction control information being resulting from an editing process based on said edit point and serving to control reproduction of said data.

8. A computer program operable to configure a computer to create information to be provided to a reproducing apparatus for reproducing data, by performing the steps of:

acquiring edit point information describing an edit point set for said data; and
creating reproduction control information in accordance with said edit point information acquired in said acquiring step, said reproduction control information resulting from an editing process based on said edit point and serving to control reproduction of said data.

9. A reproducing apparatus comprising:

acquiring means for acquiring reproduction control information, which is created in accordance with edit point information describing an edit point set for data and which serves to control reproduction of said data; and
reproducing means for reproducing said data in accordance with said reproduction control information acquired by said acquiring means.

10. The reproducing apparatus according to claim 9, further comprising determining means and selecting means for use when said reproduction control information includes information for indicating as a reproduction object data, which are relocated by an information creating apparatus for creating said reproduction control information and which are in proximity of said edit point;
wherein said determining means determines a location at which to start reproducing said data in accordance with said reproduction control information;
wherein said selecting means selects a decoder for reproducing said data; and
wherein said reproducing means reproduces said data based on said reproduction control information, on the starting location determined by said determining means, and on said decoder selected by said selecting means.

11. The reproducing apparatus according to claim 9, further comprising determining means for use when said reproduction control information includes information for indicating as a reproduction object data, which are relocated by an information creating apparatus for creating said reproduction control information and which are in proximity of said edit point, and information for designating a decoder for reproducing said data;

wherein said determining means determines a location at which to start reproducing said data in accordance with said reproduction control information; and

wherein said reproducing means reproduces said data based on said reproduction control information and on the starting location determined by said determining means.

**12.** The reproducing apparatus according to claim 9, wherein, if said reproduction control information includes information for indicating as a reproduction object data, which are relocated by an information creating apparatus for creating said reproduction control information and which are in proximity of said edit point, information for designating a decoder for reproducing said data, and information for designating a location at which to start reproducing said data, then said reproducing means reproduces said data solely in accordance with said reproduction control information.

**13.** A reproducing method comprising the steps of:

acquiring reproduction control information, which is created in accordance with edit point information describing an edit point set for data and which serves to control reproduction of said data; and
reproducing said data in accordance with said reproduction control information acquired in said acquiring step.

**14.** A computer program operable to configure a computer to perform the steps of:

acquiring reproduction control information, which is created in accordance with edit point information describing an edit point set for data and which serves to control reproduction of said data; and
reproducing said data in accordance with said reproduction control information acquired in said acquiring step.

FIG. 1A  REQUESTED DISPLAY

FIG. 1B  DECODING

FIG. 1C  ACTUAL DISPLAY

EP 1 463 058 A1

# F I G. 2

INFORMATION
PROCESSING BLOCK

....11

| INTERFACE | CONTROL UNIT | ADDRESS MANAGING UNIT | READ UNIT |
|---|---|---|---|

21          22          23          30

READ UNIT

PICTURE POINTER READING UNIT    41

REAL-TIME REPRODUCTION FEASIBILITY DETERMINING UNIT    24

EDIT LIST READING UNIT    42

DEVICE INFORMATION STORING UNIT    25

MAIN LINE DATA READING UNIT    43

BRIDGE CLIP CREATING UNIT    26

12

DRIVE

51

ADDITIONAL INFORMATION CREATING UNIT

PLAY LIST CREATING UNIT

WRITE UNIT

DISC INTERFACE

27          28

PICTURE POINTER CREATING UNIT    29

31

52

1

EP 1 463 058 A1

F I G. 3 A

F I G. 3 B

# F I G. 4

EDIT LIST

| ORDER OF REPRODUCTION | TIME CODE (IN) | TIME CODE (OUT) |
|:---:|:---:|:---:|
| 1 | $TC(IN_1)$ | $TC(OUT_1)$ |
| 2 | $TC(IN_2)$ | $TC(OUT_2)$ |
| 3 | $TC(IN_3)$ | $TC(OUT_3)$ |

# F I G. 5

- 61 CPU
- 62 ROM
- 63 RAM
- 64 (bus)
- 65 INPUT/OUTPUT INTERFACE
- 66 INPUT UNIT
- 67 OUTPUT UNIT
- 68 STORAGE UNIT
  - 81 FILE SYSTEM
- 69 DRIVE
- 70 REMOVABLE MEDIA
- 12 DRIVE
- 52

# FIG. 6

REPRODUCTION CONTROL BLOCK 111

READ UNIT 121

PICTURE POINTER READING UNIT 131

PLAY LIST READING UNIT 132

ADDRESS MANAGING UNIT 122

DECODE SCHEDULING UNIT 123

DECODER SELECTING UNIT 133

DECODER CONTROLLING UNIT 124

DRIVE 112

DISC INTERFACE 141

52

101

EP 1 463 058 A1

# F I G. 7

OPERATING UNIT — 152

151 — CONTROLLER — 153

OPERATING UNIT — 152

112 — DRIVE

BUFFER 154₁

DECODER 155₁

BUFFER 154₂

DECODER 155₂

SWITCHER

DISPLAY UNIT — 157

BUFFER UNIT

DECODER UNIT

154

155

156

52

101

EP 1 463 058 A1

33

# F I G. 8

| PICTURE WITH EDIT POINT | PICTURE SEQUENCE |
|---|---|
| B1 | GOP (n−1) {I3, P6, P9, P12, P15}, GOP (n) {I3, B1, B2, P6, B4··· |
| B2 | GOP (n−1) {I3, P6, P9, P12, P15}, GOP (n) {I3, B2, P6, B4··· |
| I3 | GOP (n) {I3, P6, B4, B5, P9, B7, B8, P12, B10, ···}, ··· |
| B4 | GOP (n) {I3, P6, B4, B5, P9, B7, B8, P12, B10, ···}, ··· |
| B5 | GOP (n) {I3, P6, B5, P9, B7, B8, P12, B10, ···}, ··· |
| P6 | GOP (n) {I3, P6, P9, B7, B8, P12, B10, ···}, ··· |
| B7 | GOP (n) {I3, P6, P9, B7, B8, P12, B10, ···}, ··· |
| B8 | GOP (n) {I3, P6, P9, B8, P12, B10, ···}, ··· |
| P9 | GOP (n) {I3, P6, P9, P12, B10, ···}, ··· |
| B10 | GOP (n) {I3, P6, P9, P12, B10, B11, P15, B13, B14}, ··· |
| B11 | GOP (n) {I3, P6, P9, P12, B11, P15, B13, B14}, ··· |
| P12 | GOP (n) {I3, P6, P9, P12, P15, B13, B14}, ··· |
| B13 | GOP (n) {I3, P6, P9, P12, P15, B13, B14}, ··· |
| B14 | GOP (n) {I3, P6, P9, P12, P15, B14}, ··· |
| P15 | GOP (n) {I3, P6, P9, P12, P15}, ··· |

EP 1 463 058 A1

EP 1 463 058 A1

# F I G. 9 A  DISPLAY

GOP (m−1)  GOP (m)  GOP (n)  GOP (m+2)  GOP (m+3)

··· | B 13 | B 14 | P 15 | B 1 | B 2 | I 3 | B 4 | B 5 | P 6 | B 1 | B 2 | I 3 | B 4 | B 5 | P 6 | B 1 | B 2 | I 3 | B 4 | B 5 | P 6 | B 7 | B 8 | P 9 | B 10 | B 11 | P 12 | B 13 | B 14 | P 15 | B 1 | B 2 | I 3 | ···

OUT$_1$ IN$_2$    OUT$_2$ IN$_3$

DISPLAY TIME $t_n$    DISPLAY TIME $t'_n$

# F I G. 9 B  DECODER 155$_1$

GOP (m−1)  GOP (m)

··· | P 15 | B 13 | B 14 | I 3 | B 1 | B 2 | P 6 | B 4 | B 5 |

$t_{n-8}$        $t_{n-2}$

GOP (m+1)  GOP (m+2)  GOP (m+3)

| I 3 | P 6 | P 9 | P 12 | P 15 | I 3 | B 1 | B 2 | P 6 | B 4 | B 5 | P 9 | B 7 | B 8 | P 12 | B 10 | B 11 | P 15 | B 13 | B 14 | I 3 | B 1 | B 2 | ···

$t'_{n-7}$        $t'_{n-2}$  $t'_n$

# F I G. 9 C  DECODER 155$_2$

GOP (n−1)  GOP (n)

| I 3 | P 6 | P 9 | P 12 | P 15 | I 3 | B 1 | B 2 | P 6 | B 4 | B 5 |

$t_{n-7}$        $t_{n-2}$  $t_n$

# F I G. 1 0

# FIG. 11

P(n)

CLIP B

CLIP A

CLIP C

EDIT POINT n-1
=EP(n-1)

EDIT POINT n
=EP(n)

THE NUMBER OF I AND P PICTURES IN
THIS PORTION IS REPRESENTED BY Nip

# F I G. 1 2

START PLAY LIST CREATING PROCESS

READ EDIT LIST FROM OPTICAL DISC AND INTERPRET THE RETRIEVED LIST — S1

READ PICTURE POINTERS FOR CLIPS TO BE REFERENCED IN EDIT LIST — S2

CONVERT LOGICAL ADDRESSES TO PHYSICAL ADDRESSES — S3

DETERMINE FEASIBILITY OF REAL-TIME REPRODUCTION — S4

ANY BRIDGE CLIP NEEDED TO BE CREATED ? — S5

NO

YES

UTILIZE EDIT LIST AS PLAY LIST — S15

② 

DETERMINE LOCATIONS WHERE BRIDGE CLIPS ARE TO BE CREATED — S6

CREATE BRIDGE CLIPS — S7

BRIDGE CLIPS CREATED FOR ALL LOCATIONS ? — S8

NO

YES

①

# F I G. 1 3

(1)

CREATE PICTURE POINTERS FOR BRIDGE CLIPS — S9

MODIFY EDIT LIST INTO PLAY LIST SO THAT REPRODUCTION IS PERFORMED IN REFERENCE TO BRIDGE CLIPS — S10

(2)

NO ⟨ ADDITIONAL INFORMATION NEEDED ? ⟩ S11

YES

PERFORM ADDITIONAL INFORMATION CREATING PROCESS — S12

CREATE PICTURE POINTERS FOR CLIPS TO BE REFERENCED IN PLAY LIST — S13

WRITE PLAY LIST AND PICTURE POINTERS TO OPTICAL DISC — S14

END

# F I G. 1 4

```
<body>
        <par>
         <!-- Clip1 -->
         <ref src=" urn:smpte:umid:XX...VA"
              clipBegin="smpte=00:00:00:00" clipEnd="smpte=00:05:00:12" />
         <!-- Clip2 -->
         <ref src=" urn:smpte:umid:YY...VA" begin="smpte=00:05:00:12"
              clipBegin="smpte=00:02:00:00" clipEnd="smpte=00:02:00:10" />
         <!-- Clip3 -->
         <ref src=" urn:smpte:umid:ZZ...VA" begin="smpte=00:05:00:22"
              clipBegin="smpte=00:10:00:03" />
        </par>
</body>
```

EP 1 463 058 A1

# FIG. 15

LISTED ORDER (DISPLAY ORDER FRAME NO.)
1, TOP OF GOP ; 0, OTHERS
top_field_first
repeat_first_field

picture type 001 : I picture
010 : P picture
011 : B picture
000 D (dummy) others are reserved

| # | | Size | type | File Address |
|---|---|---|---|---|
| #0 | 1 | Size | B | File Address |
| #1 | 0 | : | B | : |
| #2 | 0 | : | I | : |
| : | 0 | : | B | : |
| : | 0 | : | B | : |
| : | 0 | : | P | : |
| : | 0 | : | : | : |
| : | : | : | : | : |
| : | : | : | : | : |
| : | : | : | : | : |
| : | : | : | : | : |
| : | : | : | : | : |
| #n | 0 | : | P | : |

3 bits   21 bits (Max: 2 Mbytes)   3 bits   37 bits (Max: 137 Gbytes)

3 bytes    5 bytes

8 bytes

# F I G. 1 6

TC=00:05:00:00

OUT₁　　TC=00:05:00:12

CLIP #1
UMID=XX...VA

| GOP (m) | GOP (m+1) | GOP (m+2) |

TC=00:02:00:00　　　　TC=00:02:00:10

IN₂　OUT₂

CLIP #2
UMID=YY...VA

| GOP (n) |

TC=00:10:00:03

IN₃

CLIP #3
UMID=ZZ...VA

| GOP (o) | GOP (o+1) | GOP (o+2) |

EP 1 463 058 A1

# F I G. 1 7

EP 1 463 058 A1

# F I G. 1 8

```
<body>
   <par>
    <!-- Clip1 -->
    <ref src= "urn:smpte:umid:xx...VA"
         clipBegin=" smpte=00:00:00:00" clipEnd="smpte=00:05:00:00" />

    <!?-- Bridge Clip -->
    <ref src= "urn:smpte:umid:AA...VA" begin="smpte=00:05:00:00"
         clipBegin=" smpte=00:00:00:00" clipEnd="smpte=00:00:00:12" />
    <ref src= "urn:smpte:umid:AA...VA" begin="smpte=00:05:00:12"
         clipBegin=" smpte=00:00:00:17" clipEnd="smpte=00:00:00:27" />
    <ref src= "urn:smpte:umid:AA...VA" begin="smpte=00:05:00:22"
         clipBegin=" smpte=00:00:01:03" clipEnd="smpte=00:00:01:14" />

    <!-- Clip3 -->
    <ref src= "urn:smpte:umid:ZZ...VA" begin="smpte=00:05:00:33"
         clipBegin=" smpte=00:10:00:15" />
   </par>
</body>
```

EP 1 463 058 A1

# FIG. 19

```
<body>
    <par>
     <!-- Clip1 -->
     <ref src= "../0001/video01.mpg"
          clipBegin=" smpte=00:00:00:00" clipEnd="smpte=00:05:00:00" />

     <!?-- Bridge Clip -->
     <ref src= "../../Edit/0002/video02.mpg" begin="smpte=00:05:00:00"
          clipBegin=" smpte=00:00:00:00" clipEnd="smpte=00:00:00:12" />
     <ref src= "../../Edit/0002/video02.mpg" begin="smpte=00:05:00:12"
          clipBegin=" smpte=00:00:00:17" clipEnd="smpte=00:00:00:27" />
     <ref src= "../../Edit/0002/video02.mpg" begin="smpte=00:05:00:22"
          clipBegin=" smpte=00:00:01:03" clipEnd="smpte=00:00:01:14" />

     <!-- Clip3 -->
     <ref src= "../0005/video05.mpg" begin="smpte=00:05:00:33"
          clipBegin=" smpte=00:10:00:15" />
    </par>
</body>
```

EP 1 463 058 A1

# FIG. 20

```
  ( START DATA REPRODUCING PROCESS )
                    |
                    v
  +-----------------------------------+  S31
  |  READ AND INTERPRET PLAY LIST     |
  +-----------------------------------+
                    |
                    v
  +-----------------------------------+  S32
  |  READ PICTURE POINTERS FOR CLIPS  |
  |  TO BE REFERENCED IN PLAY LIST    |
  +-----------------------------------+
                    |
                    v
  +-----------------------------------+  S33
  |  SCHEDULE DECODE STARTING         |
  |  LOCATIONS AND DECODE STARTING    |
  |  TIMES BASED ON PLAY LIST AND     |
  |  PICTURE POINTERS                 |
  +-----------------------------------+
                    |
                    v
  +-----------------------------------+  S34
  |  SELECT DECODER                   |
  +-----------------------------------+
                    |
                    v
  +-----------------------------------+  S35
  |  FROM PICTURE POINTERS, ACQUIRE   |
  |  FILE ADDRESSES OF CLIPS TO BE    |
  |  REFERENCED                       |
  +-----------------------------------+
                    |
                    v
  +-----------------------------------+  S36
  |  ACQUIRE PHYSICAL ADDRESSES OF    |
  |  CLIPS TO BE REFERENCED           |
  +-----------------------------------+
                    |
                    v
  +-----------------------------------+  S37
  |  REPRODUCE DATA                   |
  +-----------------------------------+
                    |
                    v
  < STOP OPERATION PERFORMED ? > S38
            |              YES
            | NO
            v
  < REPRODUCTION SET TO BE       > S39
  < TERMINATED ?                 >
      NO      |
              | YES
              v
           ( END )
```

# F I G. 2 1

GOP

DECODER 155$_1$

DECODER 155$_2$

DISPLAY

TC=00:05:00:00

CLIP #1
src= ".../0001/video01.mpg"

GOP (m) | GOP (m+1) | GOP (m+2)

TC=00:00:00:17

TC=00:00:00:27

A$_1$

OUT$_1$ IN$_2$ OUT$_2$ IN$_3$  A$_2$

BRIDGE CLIP
src= ".../../Edit/0002/video02.mpg"

GOP (m+2) | GOP (n) | GOP (o)

TC=00:00:00:00

TC=00:00:01:03

TC=00:00:01:14

TC=00:00:00:12

CLIP #3
src= ".../0005/video05.mpg"

GOP (o) | GOP (o+1) | GOP (o+2)

TC=00:10:00:15

EP 1 463 058 A1

# F I G. 2 2

EP 1 463 058 A1

$OUT_1/IN_2$   $OUT_2/IN_3$

| GOP (m) | GOP (m+1) | GOP (m+2) | GOP (n) | GOP (o) | GOP (o+1) | GOP (o+2) |
|---------|-----------|-----------|---------|---------|-----------|-----------|

CLIP #1          BRIDGE CLIP          CLIP #3

F I G. 2 3

INFORMATION PROCESSING BLOCK

READ UNIT

- 21 INTERFACE
- 22 CONTROL UNIT
- 23 ADDRESS MANAGING UNIT
- 24 REAL-TIME REPRODUCTION FEASIBILITY DETERMINING UNIT
- 25 DEVICE INFORMATION STORING UNIT
- 26 BRIDGE CLIP CREATING UNIT
- 27 ADDITIONAL INFORMATION CREATING UNIT
- 201 DECODER SELECTING UNIT
- 28 PLAY LIST CREATING UNIT
- 29 PICTURE POINTER CREATING UNIT
- 30 READ UNIT
- 41 PICTURE POINTER READING UNIT
- 42 EDIT LIST READING UNIT
- 43 MAIN LINE DATA READING UNIT
- 31 WRITE UNIT
- 11
- 12 DRIVE
- 51 DISC INTERFACE
- 52
- 1

EP 1 463 058 A1

# FIG. 24

EP 1 463 058 A1

# F I G. 2 5

```
( START  INFORMATION  ADDING  PROCESS )
                      │
                      ▼
┌──────────────────────────────────────┐  S51
│ SELECT DECODERS SO THAT ALL GOP'S    │
│ IN EACH CLIP ARE DECODED BY THE      │
│ SAME DECODER                          │
└──────────────────────────────────────┘
                      │
                      ▼
┌──────────────────────────────────────┐  S52
│     ADD DECODER DESIGNATION          │
│        INFORMATION                    │
└──────────────────────────────────────┘
                      │
                      ▼
              ( RETURN )
```

# FIG. 26

```
<body>
   <par>
    <!-- Clip1 -->
    <ref src= "../0001/video01.mpg"
         clipBegin="smpte=00:00:00:00" clipEnd="smpte=00:05:00:00 "
         decoder= "0"  />

    <!-- Bridge Clip -->
    <ref src= "../../Edit/0002/video02.mpg" begin="smpte=00:05:00:00"
         clipBegin="smpte=00:00:00:00" clipEnd="smpte=00:00:00:12 "
         decoder= "0" />
    <ref src= "../../Edit/0002/video02.mpg" begin="smpte=00:05:00:12"
         clipBegin="smpte=00:00:00:17" clipEnd="smpte=00:00:00:27 "
         decoder= "1" />
    <ref src= "../../Edit/0002/video02.mpg" begin="smpte=00:05:00:22"
         clipBegin="smpte=00:00:01:03" clipEnd="smpte=00:00:01:14 "
         decoder= "0" />

    <!-- Clip3 -->
    <ref src= "../0005/video05.mpg" begin="smpte=00:05:00:33"
         clipBegin="smpte=00:10:00:15" decoder= "0" />
   </par>
</body>
```

EP 1 463 058 A1

# FIG. 27

```
( START DATA REPRODUCING PROCESS )
                    │
                    ▼
┌────────────────────────────────────────┐ S61
│  READ AND INTERPRET PLAY LIST           │
└────────────────────────────────────────┘
                    │
                    ▼
┌────────────────────────────────────────┐ S62
│  READ PICTURE POINTERS FOR CLIPS        │
│  TO BE REFERENCED IN PLAY LIST          │
└────────────────────────────────────────┘
                    │
                    ▼
┌────────────────────────────────────────┐ S63
│  SCHEDULE DECODE STARTING               │
│  LOCATIONS AND DECODE STARTING          │
│  TIMES FOR EACH DECODER BASED ON        │
│  PLAY LIST AND PICTURE POINTERS         │
└────────────────────────────────────────┘
                    │
                    ▼
┌────────────────────────────────────────┐ S64
│  FROM PICTURE POINTERS, ACQUIRE         │
│  FILE ADDRESSES OF CLIPS TO BE          │
│  REFERENCED                             │
└────────────────────────────────────────┘
                    │
                    ▼
┌────────────────────────────────────────┐ S65
│  ACQUIRE PHYSICAL ADDRESSES OF          │
│  CLIPS TO BE REFERENCED                 │
└────────────────────────────────────────┘
                    │
                    ▼
┌────────────────────────────────────────┐ S66
│  SWITCH DECODERS BASED ON               │
│  DESCRIPTION OF PLAY LIST TO            │
│  REPRODUCE DATA                         │
└────────────────────────────────────────┘
                    │
                    ▼
        < STOP OPERATION PERFORMED ? >  S67
                    │              YES
                   NO
                    ▼
   NO < REPRODUCTION SET TO BE            >  S68
        < TERMINATED ?                    >
                    │
                   YES
                    ▼
               ( END )
```

# F I G. 2 8

11 ... INFORMATION PROCESSING BLOCK

30 READ UNIT
- 41 PICTURE POINTER READING UNIT
- 42 EDIT LIST READING UNIT
- 43 MAIN LINE DATA READING UNIT

12 ... DRIVE
- 51 DISC INTERFACE
- 52

31 WRITE UNIT

23 ADDRESS MANAGING UNIT

24 REAL-TIME REPRODUCTION FEASIBILITY DETERMINING UNIT

25 DEVICE INFORMATION STORING UNIT

26 BRIDGE CLIP CREATING UNIT

28 PLAY LIST CREATING UNIT

29 PICTURE POINTER CREATING UNIT

22 CONTROL UNIT

21 USER INTERFACE

27 ADDITIONAL INFORMATION CREATING UNIT
- 211 DECODE SCHEDULING UNIT

1

# FIG. 29

# F I G. 3 0

```
( START INFORMATION ADDING PROCESS )
                    |
                    ↓
┌──────────────────────────────────────┐  S81
│  SCHEDULE DECODE STARTING             │
│  LOCATIONS AND DECODE STARTING        │
│  TIMES FOR EACH DECODER               │
└──────────────────────────────────────┘
                    |
                    ↓
┌──────────────────────────────────────┐  S82
│  CREATE PLAY LIST CONTAINING          │
│  ATTRIBUTE INFORMATION REPRESENTING   │
│  DECODE STARTING TIMES                │
└──────────────────────────────────────┘
                    |
                    ↓
            ( RETURN )
```

# F I G. 3 1

```
<body>
    <par>
    <!-- Clip1 -->
    <ref src= "../0001/video01.mpg"
          clipBegin="smpte=00:00:00:00" clipEnd="smpte=00:05:00:00 "/>

    <!-- Bridge Clip -->
    <ref src= "../../Edit/0002/video02.mpg" begin="smpte=00:05:00:00"
          clipBegin="smpte=00:00:00:00" clipEnd="smpte=00:00:00:12 "/>
    <ref src= "../../Edit/0002/video02.mpg" begin="smpte=00:05:00:12"
          clipBegin="smpte=00:00:00:17" clipEnd="smpte=00:00:00:27 "
          preDecBegin="smpte=00:00:00:15" preDecDur="1" />
    <ref src= "../../Edit/0002/video02.mpg" begin="smpte=00:05:00:22"
          clipBegin="smpte=00:00:01:03" clipEnd="smpte=00:00:01:14 "
          preDecBegin="smpte=00:00:01:00" preDecDur="2" />

    <!-- Clip3 -->
    <ref src= "../0005/video05.mpg" begin="smpte=00:05:00:33"
          clipBegin="smpte=00:10:00:15" />
    </par>
</body>
```

EP 1 463 058 A1

EP 1 463 058 A1

# F I G. 3 2

```
        ( START DATA REPRODUCING PROCESS )
                        ↓
     ┌──────────────────────────────────┐   S91
     │    READ AND INTERPRET PLAY LIST   │
     └──────────────────────────────────┘
                        ↓
     ┌──────────────────────────────────┐   S92
     │  READ PICTURE POINTERS FOR CLIPS  │
     │  TO BE REFERENCED IN PLAY LIST    │
     └──────────────────────────────────┘
                        ↓
     ┌──────────────────────────────────┐   S93
     │  FROM PICTURE POINTERS,ACQUIRE    │
     │  FILE ADDRESSES OF CLIPS TO BE    │
     │  REFERENCED                       │
     └──────────────────────────────────┘
                        ↓
     ┌──────────────────────────────────┐   S94
     │  ACQUIRE PHYSICAL ADDRESSES OF    │
     │  CLIPS TO BE REFERENCED           │
     └──────────────────────────────────┘
                        ↓
     ┌──────────────────────────────────┐   S95
     │           REPRODUCE DATA          │
     └──────────────────────────────────┘
                        ↓
     < preDecBegin ATTRIBUTE                  S96
        DETECTED ? >                          NO
                   | YES
                   ↓
     ┌──────────────────────────────────┐   S97
     │          SWITCH DECODERS          │
     └──────────────────────────────────┘
                        ↓
     < STOP OPERATION PERFORMED ? >           S98
                                              YES
                   | NO
                   ↓
  NO < REPRODUCTION SET TO BE                 S99
        TERMINATED ? >
                   | YES
                   ↓
              ( END )
```

58

# F I G. 3 3

```
( START INFORMATION ADDING PROCESS )
                      |
                      v
+-----------------------------------------+  S111
| SCHEDULE DECODE STARTING                 |
| LOCATIONS AND DECODE STARTING            |
| TIMES FOR EACH DECODER                   |
+-----------------------------------------+
                      |
                      v
+-----------------------------------------+  S112
| CREATE PLAY LIST WHICH CONTAINS          |
| ATTRIBUTE INFORMATION REPRESENTING       |
| DECODE STARTING TIMES AND WHICH HAS      |
| FILE ADDRESSES DESIGNATING CLIPS         |
| TO BE REFERENCED                         |
+-----------------------------------------+
                      |
                      v
              ( RETURN )
```

# F I G. 3 4

```
<body>
<par>
  <!-- Clip1 -->
  <ref src= "../0001/video01.mpg"
        clipBegin= "faddress=0x00000" clipEnd= "faddress=0x002fa "/>

  <!-- Bridge Clip -->
  <ref src= "../../Edit/0002/video02.mpg" begin="smpte=00:05:00:00"
        clipBegin= "faddress=0x00000" clipEnd= "faddress=0x001bc" />
  <ref src= "../../Edit/0002/video02.mpg" begin="smpte=00:05:00:12"
        clipBegin= "faddress=0x0045d" clipEnd= "faddress=0x0084f"
        preDecBegin= "faddress=0x00421" preDecDur="1" />
  <ref src= "../../Edit/0002/video02.mpg" begin="smpte=00:05:00:22"
        clipBegin= "faddress=0x00a01" clipEnd= "faddress=0x00df1 "
        preDecBegin= "faddress=0x00970" preDecDur="2" />

  <!-- Clip3 -->
  <ref src= "../0005/video05.mpg" begin="smpte=00:05:00:33"
        clipBegin= "faddress=0x00ec0" decoder="0" />
</par>
</body>
```

EP 1 463 058 A1

# F I G. 3 5

START DATA REPRODUCING PROCESS

READ AND INTERPRET PLAY LIST — S121

READ PICTURE POINTERS FOR CLIPS TO BE REFERENCED IN PLAY LIST — S122

ACQUIRE PHYSICAL ADDRESSES OF CLIPS TO BE REFERENCED — S123

REPRODUCE DATA — S124

preDecBegin ATTRIBUTE DETECTED ? — S125   NO

YES

SWITCH DECODERS — S126

STOP OPERATION PERFORMED ? — S127   YES

NO

REPRODUCTION SET TO BE TERMINATED ? — S128

NO

YES

END

# F I G. 3 6

221

1        101

| DISC APPARATUS | ←→ | REPRODUCING APPARATUS |

**European Patent Office**

# EUROPEAN SEARCH REPORT

Application Number

EP 04 25 1756

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 855 714 A (SONY CORP) 29 July 1998 (1998-07-29) * column 6, line 16 - column 10, line 11 * ----- | 1,3-14 | G11B27/034 G11B27/10 |
| X | WO 99/48096 A (LUITJENS STEVEN B ; SAEIJS RONALD W J J (NL); KELLY DECLAN P (NL); KON) 23 September 1999 (1999-09-23) * page 6, line 11 - page 8, line 5 * * page 13, line 28 - page 14, line 22 * ----- | 1,2,4-14 | |

TECHNICAL FIELDS SEARCHED (Int.Cl.7)

G11B

The present search report has been drawn up for all claims

| Place of search | Date of completion of the search | Examiner |
|---|---|---|
| The Hague | 26 July 2004 | Mourik, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 25 1756

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2004

| Patent document cited in search report | | Publication date | Patent family member(s) | | Publication date |
|---|---|---|---|---|---|
| EP 0855714 | A | 29-07-1998 | JP | 10210402 A | 07-08-1998 |
| | | | CN | 1196639 A ,B | 21-10-1998 |
| | | | EP | 0855714 A2 | 29-07-1998 |
| | | | US | 2002106186 A1 | 08-08-2002 |
| WO 9948096 | A | 23-09-1999 | AT | 255764 T | 15-12-2003 |
| | | | AT | 268497 T | 15-06-2004 |
| | | | AU | 755744 B2 | 19-12-2002 |
| | | | AU | 2437099 A | 11-10-1999 |
| | | | AU | 755652 B2 | 19-12-2002 |
| | | | AU | 2635099 A | 11-10-1999 |
| | | | AU | 755758 B2 | 19-12-2002 |
| | | | AU | 2635199 A | 11-10-1999 |
| | | | BR | 9906326 A | 04-07-2000 |
| | | | BR | 9906329 A | 04-07-2000 |
| | | | BR | 9906330 A | 04-07-2000 |
| | | | CA | 2290498 A1 | 23-09-1999 |
| | | | CA | 2290641 A1 | 23-09-1999 |
| | | | CA | 2291145 A1 | 23-09-1999 |
| | | | CN | 1269049 T | 04-10-2000 |
| | | | CN | 1272207 T | 01-11-2000 |
| | | | CN | 1301385 T | 27-06-2001 |
| | | | DE | 69913266 D1 | 15-01-2004 |
| | | | DE | 69917721 D1 | 08-07-2004 |
| | | | EP | 0983591 A2 | 08-03-2000 |
| | | | EP | 0983592 A1 | 08-03-2000 |
| | | | EP | 0988632 A2 | 29-03-2000 |
| | | | WO | 9948094 A2 | 23-09-1999 |
| | | | WO | 9948095 A2 | 23-09-1999 |
| | | | WO | 9948096 A2 | 23-09-1999 |
| | | | JP | 2002511975 T | 16-04-2002 |
| | | | JP | 2002516641 T | 04-06-2002 |
| | | | JP | 2002516642 T | 04-06-2002 |
| | | | PL | 336981 A1 | 31-07-2000 |
| | | | PL | 337095 A1 | 31-07-2000 |
| | | | PL | 337097 A1 | 31-07-2000 |
| | | | PT | 983592 T | 30-04-2004 |
| | | | TW | 448429 B | 01-08-2001 |
| | | | TW | 432367 B | 01-05-2001 |
| | | | US | 2003228139 A1 | 11-12-2003 |
| | | | US | 6760542 B1 | 06-07-2004 |
| | | | US | 6430135 B1 | 06-08-2002 |

EPO FORM P0459

For more details about this annex : see Official Journal of the European Patent Office, No. 12/82